# EUROPEAN PATENT SPECIFICATION

(11) **EP 2 650 410 B1**
(45) Date of publication and mention of the grant of the patent: **10.06.2015**
(21) Application number: 11846639.0
(22) Date of filing: 27.04.2011
(51) Int. Cl.: D01D 5/00, D01D 4/00, D01D 13/00, D01D 4/04, B82Y 40/00, D01D 13/02, D01F 13/00, F24F 3/14

(54) **NANOFIBER MANUFACTURING DEVICE**
NANOFASERHERSTELLUNGSVORRICHTUNG
DISPOSITIF DE FABRICATION DE NANOFIBRES

(30) Priority: 06.12.2010 JP 2010272078; 25.02.2011 KR 20110017376
(43) Date of publication of application: 16.10.2013
(73) Proprietor: Toptec Co., Ltd., Gumi-shi, Gyeonbuk 730-853 (KR); Shinshu University, Matsumoto-shi, Nagano 390-8621 (JP)
(72) Inventor: LEE, Jae Hwan, Gumi-si Gyeongsangbuk-do 730-853 (KR); KIM, Ick Soo, Ueda-shi Nagano 386-8567 (JP)
(74) Representative: Stolmár & Partner Patentanwälte PartG mbB
(86) International application number: PCT/KR2011/003064
(87) International publication number: WO 2012/077872

(56) References cited:
- EP-A2- 1 975 284
- EP-A2- 1 990 448
- JP-A- 2008 196 061
- JP-A- 2008 303 499
- KR-A- 20100 062 437
- KR-A- 20100 078 811
- KR-B1- 100 756 893
- KR-B1- 100 843 266
- US-A1- 2006 024 399

## Description

### [Technical Field]

The present invention relates to a nanofiber manufacturing apparatus.

### [Background Art]

In conventional practices, there is proposed a nanofiber manufacturing appratus having a plurality of electrospinning units located along a given conveying direction in which a long sheet is conveyed. Further, as the electrospinning devices used in such nanofiber manufacturing apparatus, there has been proposed Japanese Patent No.2008-506864 (hereinafter, referred to as cited document) wherein each electrospinnin device applies a high voltage to a collector in the state where a nozzle block is grounded, thereby conducting electrospinning.

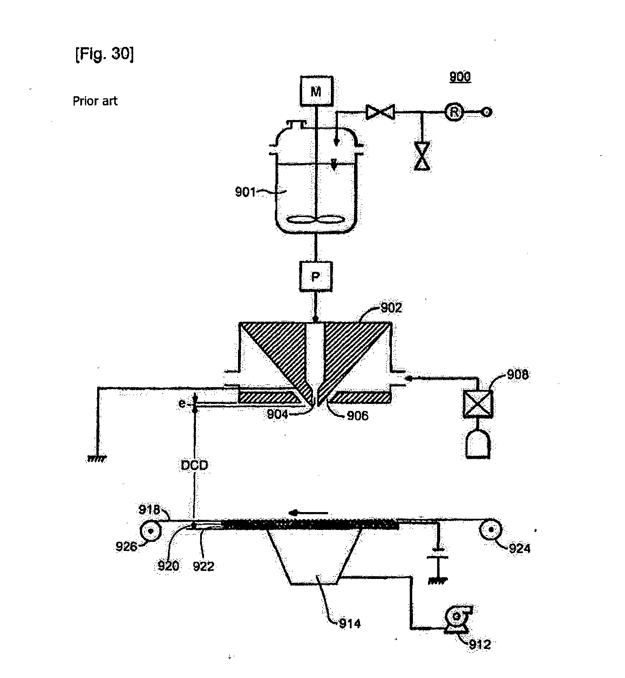

FIG.30 shows an electrospinning device 900 disclosed in the above-mentioned cited document. As shown, the electrospinning device 900 includes a material tank 901 in which a polymer solution is stored, a nozzle block 902 having discharge nozzles 904 form which the polymer solution is ejected and a gas nozzle 906 adapted to form a flow of gas, a collector 920 formed of a conductive element, an injection roll 924 and a winding roll 926 for conveying a collection base material 918. In FIG.30, further, a reference numeral 912 indicates an intake blower, 914 a gas collection pipe, and 922 a support member.

As shown in FIG.30, the electrospinning device 900 ejects the polymer solution from the discharge nozzles 904, while applying a negative high voltage to the collector 920 in the state where the nozzle block 902 is grounded, thereby conducting the electrospinning of the nanofibers on the collection base material being conveyed.

According to the electrospinning device 900, all of the nozzle block 902, the material tank 901 in which the polymer solution is stored before the ejection from the discharge nozzles 904, and polymer solution transferring instruments (for example, pipes or pumps) for transferring the polymer solution to the nozzle block 902 from the material tank 901 become ground potentials, so that there is no need to provide high potential voltage specifications to the material tank 901 or the polymer solution transferring instruments. Accordingly, the complication of the electrospinning device 900, which is caused by the high potential voltage specifications of the material tank 901 or the polymer solution transferring instruments, can be prevented.

According to the electrospinning device 900, further, while a high voltage is being applied to the collector 920 made in a relatively simple structure and shape in the state where the nozzle block 902 having a relatively complicate structure and shape is grounded, the electrospinning is conducted in stable conditions, without having any discharging or voltage drop.

According to the electrospinning device 900 disclosed in the cited document, however, the insulation between the collector and the case and other members is not sufficiently formed, and so as to manufacture the nanofibers having desired performance, thus, if the electrospinning is conducted through the application of an extremely high voltage (for example, 35kV) between the nozzle block and the collector, the insulation breakdown between the collector and the case and other members is caused. Even if the insulation breakdown does not occur, leak current may be increased to an undesirable level. As a result, the operation of the electrospinning device should stop, which makes it hard to continuously operate the electrospinning device for long hours, and furthermore, it is difficult to stably produce the nanofibers having the desired performance in large quantities.

According to the electrospinning device 900 disclosed in the cited document, additionally, since the high voltage is applied to the collector, large electrostatic attraction between the collector and the collection base material occurs to cause the base material to be pulled toward the collector, which fails to the gentle conveying of the base material. Accordingly, it is hard to conduct the electrospinning of the nanofibers under the uniform conditions for long hours, and of course, the operation itself of the electrospinning device 20 should stop. Further, it is impossible to produce the nanofibers having uniform qualities (for example, in the mean diameters of nanofibers, in the distribution of the diameters of nanofibers, in the accumulation quantities of nanofibers, in the thicknesses of nanofiber layers, and in the air permeability of nanofiber layers and so on) in large quantities.

### [Disclosure]

### [Technical Problem]

Accordingly, the present invention has been made in view of the above-mentioned problems occurring in the prior art, and it is an object of the present invention to provide a nanofiber manufacturing apparatus that is capable of stably producing nanofibers having desired performance in large quantities.

### [Technical Solution]

To accomplish the above object, according to the present invention, there is provided a nanofiber manufacturing apparatus having a plurality of electrospinning units disposed serially along the conveying direction of a long sheet conveyed at a given conveying speed so as to accumulate nanofibers on the long sheet, each electrospinning unit including: a conductive case; a collector attached to the case by means of an insulation member; a nozzle block disposed to face the collector and having a plurality of nozzles from which polymer solution is ejected mounted thereon; a power supply adapted to apply a high voltage to a space between the collector and the nozzle block; an auxiliary belt formed of an insulative porous endless belt located and freely rotated at a position encompassing the collector; and an auxiliary belt driver adapted to rotate the auxiliary belt to a rotating speed corresponding to the conveying speed of the long sheet, wherein the positive electrode of the power supply is connected to the collector, while the negative electrode thereof to the nozzle block and the case, and when the collector is seen from the nozzle block, the outer edge of the insulation member is located more outwardly than the outer edge of the collector, so that if it is assumed that the thickness of the insulation member is a and the distance between the outer edge of the insulation member and the outer edge of the collector is b, it is satisfied that a ≥ 6mm and a+b ≥ 50mm.

According to the present invention, preferably, the auxiliary belt is formed of a polymer material having a thickness in the range between 0.7mm and 10.0mm. The polymer material is selected from polyethylene, polyacetylene, polyurethane, polypropylene, polyamide like nylon, polyacetal, polycarbonate, modified poly phenylene ether, poly butylene terephthalate, polyethylene terephthalate, non-crystal polyalylate, polysulfone, polyether sulfone, polyphenylene sulfide, polyether ether ketone, polyimide, polyethyl imide, fluorine resin, liquid crystal polymer and the like. The auxiliary belt desirably has holes having areas in the range between 0.001mm² and 1.0mm².

According to the present invention, preferably, the auxiliary belt driver includes: a plurality of auxiliary belt rollers on which the auxiliary belt is rolled; a driving motor for rotating at least one of the plurality of auxiliary belt rollers; and an auxiliary belt position controller for controlling the position of one of the plurality of auxiliary belt rollers in such a manner as to be located on one side end portion thereof from the inside of the auxiliary belt to the outside of the auxiliary belt, thereby controlling the position of the auxiliary belt with respect to the width direction of the auxiliary belt roller.

According to the present invention, preferably, the insulation member is made of polyamide, polyacetal, polycarbonate, modified poly phenylene ether, poly butylene terephthalate, polyethylene terephthalate, non-crystal polyalylate, polysulfone, polyether sulfone, polyphenylene sulfide, polyether ether ketone, polyimide, polyethyl imide, fluorine resin, liquid crystal polymer, polypropylene, high density polyethylene, or polyethylene.

According to the present invention, preferably, the nanofiber manufacturing apparatus further includes: a conveying unit adapted to convey the long sheet; and a main control unit adapted to control the operations of the conveying unit and the plurality of electrospinning units, wherein when the main control unit monitors the quantity of current supplied from each power supply to each electrospinning unit and detects that a higher current than a given quantity of first set current is supplied from one or plurality of power supplies, the main control unit transmits a current supply stop signal for stopping the current supply from one or plurality of power supplies, and at the same time, transmits a conveying speed reduction signal for reducing the conveying speed of the conveying unit to allow the quantity of nanofibers per unit area accumulated on the long sheet to be in a given range.

According to the present invention, preferably, if the main control unit detects that a lower current than a given quantity of second set current is supplied from one or a plurality of power supplies, the main control unit transmits a warning signal (for example, a warning sound or a warning indicating signal) for indicating the trouble of one or the plurality of power supplies.

According to the present invention, preferably, if it is assumed that the number of power supplies conducting the current supply for a first period of time before the reduction of the conveying speed is n and the number of power supplies conducting the current supply for a second period of time after the reduction of the conveying speed is m, the conveying speed for the second period of time is set by m/n times to the conveying speed for the first period of time under the control of the main control unit.

According to the present invention, preferably, each nozzle is located upwardly from the nozzle block to eject the polymer solution upwardly from the ejection hole thereof and has a nozzle front end portion having a shape of a cylinder cut along the plane crossing slantly to the axis of the cylinder, and the nozzle block has a polymer solution supply passage formed to supply the polymer solution to each nozzle and a polymer solution collection passage formed to collect the polymer solution overflowing from the ejection hole of each nozzle, so that the electrospinning of the nanofibers is conducted by the overflowing ejection of the polymer solution from the ejection hole of each nozzle and at the same time by the collection of the polymer solution overflowing from the ejection hole of each nozzle in such a manner as to allow the collected polymer solution to be reused as the material of the nanofibers.

According to the present invention, preferably, an angle e between the axis of the cylinder and the plane is in the range between 15° and 60°.

According to the present invention, preferably, the polymer solution collection passage includes: an accommodating portion adapted to contain the polymer solution overflowing from the ejection holes of the plurality of nozzles; a cover portion adapted to cover the accommodating portion and having a plurality of nozzle holes communicating with the plurality of nozzles; and a plurality of jackets each adapted to cover the outer periphery of each nozzle protruding from the nozzle hole and having a jacket base portion formed on the base portion thereof and a jacket front portion formed on the front end portion thereof, the jacket front portion being thinner than the jacket base portion.

According to the present invention, preferably, the nanofiber manufacturing apparatus further includes: a material tank adapted to store the polymer solution as the material of the nanofibers therein; regeneration tanks adapted to regenerate the collected polymer solution and store the regenerated polymer solution therein; an intermediate tank adapted to store the polymer solution supplied from the material tank or the regeneration tanks therein; a first transfer unit adapted to transfer the polymer solution from the polymer solution collection passage of the nozzle block to the regeneration tanks; a first transfer control unit adapted to control the transferring operation of the first transfer unit; a second transfer unit adapted to transfer the polymer solution from the material tank and the regeneration tanks to the intermediate tank; and a second transfer control unit adapted to control the transferring operation of the second transfer unit.

According to the present invention, preferably, each transfer unit includes a pipe through which the polymer solution is passed and a pump adapted to transfer the polymer solution, and each transfer control units includes a valve adapted to control the passing of the polymer solution and the quantity of the polymer solution passed and a controller adapted to control the operation of the pump.

According to the present invention, preferably, the second transfer control unit controls whether the polymer solution is transferred from any of the material tank and the regeneration tanks to the intermediate tank.

According to the present invention, preferably, any of the material tank and the regeneration tanks includes the material tank and one regeneration tank, and the material tank and the two regeneration tanks.

According to the present invention, preferably, the first transfer control unit controls whether the polymer solution is transferred to any of the regeneration tanks, and if the polymer solution is transferred from the regeneration tanks to the intermediate tank, the second transfer control unit controls whether the polymer solution is transferred from any of the regeneration tanks to the intermediate tank.

According to the present invention, preferably, the nanofiber manufacturing apparatus further includes: an air permeability measurement unit adapted to measure the air permeability of the long sheet on which the nanofibers are accumulated; and a conveying speed control unit adapted to control the conveying speed in accordance with the air permeability measured through the air permeability measurement unit.

According to the present invention, preferably, the conveying speed control unit controls the conveying speed in accordance with the deviation quantity between the air permeability measured through the air permeability measurement unit and given target thickness.

According to the present invention, preferably, the nanofiber manufacturing apparatus further includes: a thickness measurement unit adapted to measure the thickness of the long sheet on which the nanofibers are accumulated; and a conveying speed control unit adapted to control the conveying speed in accordance with the thickness measured through the thickness measurement unit.

According to the present invention, preferably, the conveying speed control unit controls the conveying speed in accordance with the deviation quantity between the thickness measured through the thickness measurement unit and given target thickness.

According to the present invention, preferably, the nanofiber manufacturing apparatus further includes: air supply units adapted to supply environmentally conditioned air correspondingly to the plurality of electrospinning units; and VOC treatment units adapted to burn and remove VOCs generated from the plurality of electrospinning units, wherein the air supply unit has a dehumidifier adapted to produce dehumidified air by using a dehumidifying agent dried through the hot air produced by the combustion heat generated during the combustion of the VOCs.

According to the present invention, preferably, the dehumidifier includes: a dehumidifying agent containing portion in which the dehumidifying agent is contained; an air introduction portion adapted to introduce air to be dehumidified thereinto; a dehumidified air sending portion from which the dehumidified air is sent; a hot air introduction portion for introducing the hot air produced by the combustion heat; and a hot air exhaust portion for exhausting the hot air of the hot air introduction portion to the outside, whereby the dehumidifier dries and regenerates the dehumidifying agent used for the dehumidification of the introduced air through the hot air introduced into the hot air introduction portion.

According to the present invention, preferably, each air supply unit includes: an air flowing passage through which the air to be dehumidified flows; an environmentally conditioned air flowing passage through which the dehumidified air sent from the dehumidified air sending portion flows; a hot air flowing passage formed separated from the environmentally conditioned air flowing passage and adapted to guide the hot air produced by the combustion heat to the hot air introduction portion; and a dehumidifier driver for driving the dehumidifier in such a manner where the air introduction portion of the dehumidifier introduces the air flowing along the air flowing passage and the hot air introduction portion introduces the hot air flowing along the hot air flowing passage.

### [Advantageous Effects]

According to the present invention, there is provided the nanofiber manufacturing apparatus wherein since the case or the nozzle block is grounded, all of the nozzle block, the material tank in which the polymer solution is stored before the ejection from the nozzles, and polymer solution transferring instruments (for example, pipes or pumps) for transferring the polymer solution to the nozzle block from the material tank become ground potentials, thereby removing the need to provide high potential voltage specifications to the material tank or the polymer solution transferring instruments, in the same manner as the electrospinning device as disclosed in the cited document. Accordingly, the complication of the electrospinning unit, which is caused by the high potential voltage specifications of the material tank or the polymer solution transferring instruments, can be prevented.

According to the present invention, when the collector is seen from the nozzle block, if it is assumed that the thickness of the insulation member is a and the distance between the outer edge of the insulation member and the outer edge of the collector is b, it is satisfied that a ≥ 6mm and a+b ≥ 50mm, so that the insulation state between the collector and the case or other members is sufficiently good, and as will be apparent from the examples as will be explained later, even if a voltage of 35kV is applied between the nozzle block and the collector to conduct the electrospinning, the insulation breakdown between the collector and the case or other members does not occur. Further, leak current is limited to a given range. As a result, possibilities where the operations of the electrospinning units stop are reduced to an extremely low level, so that the electrospinning units can be continuously operated for long hours to stably produce the nanofibers having desired performance in large quantities.

According to the present invention, further, the leak current is limited to the given range, so that the current supplied form the power supply is always monitored, thereby allowing the trouble of each electrospinning unit to be early found.

According to the present invention, further, the power supply is configured to have one positive side electrode connected to the collector and the other negative side electrode connected to the nozzle block and at the same time having ground potential, so that in the same manner as the electrospinning device as disclosed in the cited document, while a high voltage is being applied to the collector made in a relatively simple structure and shape in the state where the nozzle block having a relatively complicate structure and shape is grounded, the electrospinning is conducted in stable conditions, without having any discharging or voltage drop.

According to the present invention, further, the auxiliary belt unit includes the auxiliary belt formed of the insulative porous endless belt located and freely rotated at a position encompassing the collector and the auxiliary belt driver adapted to rotate the auxiliary belt to a rotating speed corresponding to the conveying speed of the long sheet, so that even if large electrostatic attraction between the collector and the long sheet occurs, the auxiliary belt exists between the long sheet and the collector to prevent the long sheet from being pulled toward the collector or to avoid the interference in the gentle conveying of the long sheet. Accordingly, it is possible to conduct the electrospinning of the nanofibers under the uniform conditions, and of course, the operation itself of the electrospinning units does not stop at all. Further, it is possible to produce the nanofibers having uniform qualities (for example, in the diameters of nanofibers, in the distribution of the diameters of nanofibers, in the accumulation quantities of nanofibers, in the thickness of nanofiber non-woven fabric, and in the air permeability of nanofiber non-woven fabric and so on) in large quantities.

According to the present invention, further, the auxiliary belt is rotated to the rotating speed corresponding to the conveying speed of the long sheet, so that the existence of the auxiliary belt gives no bad influence on the conveying state of the long sheet. Also, the auxiliary belt of each electrospinning unit is formed of the insulative porous endless belt, thereby giving no big influences on the distribution of the electric field between the collector and the nozzle block.

According to the present invention, further, the auxiliary belt can be reliably rotated at the rotating speed corresponding to the conveying speed of the long sheet. Also, the inclination of one auxiliary belt roller is appropriately controlled and the position of the auxiliary belt with respect to the width direction of the auxiliary belt roller is precisely controlled for long hours.

According to the present invention, further, the insulation member is made of polyamide, polyacetal, polycarbonate, modified poly phenylene ether, poly butylene terephthalate, polyethylene terephthalate, non-crystal polyalylate, polysulfone, polyether sulfone, polyphenylene sulfide, polyether ether ketone, polyimide, polyethyl imide, fluorine resin, liquid crystal polymer, polypropylene, high density polyethylene, or polyethylene, so that the insulation member has high insulation performance, high mechanical strength and high machinability.

According to the present invention, further, the trouble occurring from just one electrospinning unit among the plurality of electrospinning units, during the plurality of electrospinning units are continuously operated for long hours, can be immediately detected under the control of the main control unit, thereby achieving high stability in operation.

According to the present invention, further, even if a trouble occurs from just one electrospinning unit among the plurality of electrospinning units, during the plurality of electrospinning units are continuously operated for long hours, the operation of the electrospinning unit 20 having the trouble stops, while the others are still being operated, thereby completing the nanofiber manufacturing process without any stop.

According to the present invention, further, there is no separate need to set any references for satisfying the trouble on the electrospinning units. As a result, the nanofiber manufacturing apparatus can produce the nanofibers in large quantities, having high stability.

According to the present invention, further, even when the operation of the electrospinning unit having the trouble stops, the conveying speed is reduced to allow the quantity of nanofibers accumulated per unit area on the long sheet to be in a given range, by the control of the main control unit, thereby producing nanofiber non-woven fabrics having the uniform air permeability and thickness in large quantities.

According to the present invention, further, the nanofiber non-woven fabric means the long sheet on which the nanofibers are accumulated. The nanofiber non-woven fabric becomes a product, or the long sheet is removed from the nanofiber non-woven fabric to make the non-woven fabric only having the nanofiber layers, which also becomes a product. Further, the nanofibers are formed of polymers and each nanofiber has a diameter in the range of several mn and several thousand nm. Also, the polymer solution is made by dissolving the polymer in a solvent.

According to the present invention, further, the operation state of the electrospinning unit where the trouble occurs is checked and the operation thereof stops by the control of the main control unit, thereby achieving the nanofiber manufacturing apparatus having high stability.

According to the present invention, further, the quantity of nanofibers accumulated per unit area on the long sheet is in a given range.

According to the present invention, further, the electrospinning operation is conducted through the ejection of the polymer solution from the ejection holes of the plurality of upward nozzles, thereby preventing the droplets occurring in the conventional nanofiber manufacturing apparatus having downward discharge nozzles and further manufacturing a high quality of nanofibers.

According to the present invention, further, the electrospinning operation is conducted through the ejection of the polymer solution overflowing from the ejection holes of the plurality of upward nozzles, thereby allowing a sufficient quantity of polymer solution to be supplied to the nozzles and further manufacturing a uniform quality of nanofibers.

According to the present invention, further, the polymer solution overflowing from the ejection holes of the plurality of upward nozzles is collected and reused as the material of the nanofibers, thereby reducing the usage cost of the material and providing low manufacturing costs and high resource saving effects.

According to the present invention, further, the front end portion of each nozzle has a shape of a cylinder cut along the plane crossing slantly to the axis of the cylinder, so that the polymer solution flowing from the ejection holes of the upward nozzles rapidly drops, without staying on the front end portion of each nozzle. This reduces the quantity of solvent volatilized from the polymer solution during the electrospinning process and at the same time extremely reduces the quantity of solidified polymers produced around the ejection holes of the upward nozzles. Accordingly, even when the electrospinning operation is conducted through the ejection of the polymer solution overflowing from the ejection holes of the plurality of upward nozzles, the quantity of solidified polymers generated can be substantially decreased, thereby preventing the solidified polymers from being attached to the nanofibers and thus ensuring a high quality of nanofibers.

According to the present invention, further, the angle e between the axis of the cylinder and the plane is in the range between 15° and 60°, and if the angle is 60° or less, the polymer solution flowing from the ejection holes of the upward nozzles rapidly drops, without staying on the front end portion of each nozzle. Further, if the angle is 15° or more, the destruction in the electrospinning conditions caused by the extension of the slant surface of the nozzle is prevented.

According to the present invention, further, the movement of the jacket covering the outer periphery of each nozzle allows the quantity of solvent volatilized from the polymer solution ejected from the ejection hole of the nozzle to be much more reduced.

According to the present invention, further, the jacket front portion is thinner than the jacket base portion, and thus, the quantity of solvent volatilized from the polymer solution overflowing from the ejection hole of the upward nozzle can be extremely reduced.

According to the present invention, further, if the regenerated polymer solution is not stored in the regeneration tanks or not sufficiently stored therein, the polymer solution is transferred from the material tank to the intermediate tank, and contrarily, if the regenerated polymer solution is sufficiently stored in the regeneration tanks, the polymer solution is transferred from the regeneration tanks to the intermediate tank, thereby allowing the supply source of the polymer solution transferred to the intermediate tank to be appropriately controlled in accordance with the quantity of polymer solution stored in the regeneration tanks.

According to the present invention, further, the collected polymer solution is regenerated through the regeneration tanks in alternating manner, thereby conducting the regeneration of the collected polymer solution, without having any stop in the manufacturing process of the nanofibers.

According to the present invention, further, the conveying speed can be controlled in accordance with the air permeability measured through the air permeability measurement unit, so that even if the spinning condition is changed in the electrospinning process for long hours to cause the air permeability to be varied, the conveying speed is appropriately controlled to allow the varying quantity of the air permeability to remain in a given range, thereby producing the nanofiber non-woven fabric having the uniform air permeability in large quantities.

According to the present invention, further, the air permeability of the long sheet on which the nanofibers are accumulated means the air permeability measured from the nanofiber layers accumulated on the long sheet and from the laminated long sheets.

According to the present invention, further, if the deviation quantity is large, the control quantity (the quantity varying from the initial value) of the conveying speed becomes increased, and if the deviation quantity is small, the control quantity (the quantity varying from the initial value) of the conveying speed becomes decreased, thereby appropriately controlling the conveying speed in accordance with the variations of the air permeability.

According to the present invention, further, the conveying speed can be controlled in accordance with the thickness measured through the thickness measurement unit, so that even if the spinning condition is changed in the electrospinning process for long hours to cause the thickness to be varied, the conveying speed is appropriately controlled to allow the varying quantity of the thickness to remain in a given range, thereby producing the nanofiber non-woven fabric having the uniform thickness in large quantities.

According to the present invention, further, the thickness of the long sheet on which the nanofibers are accumulated means the thickness measured from the nanofiber layers accumulated on the long sheet and from the laminated long sheets.

According to the present invention, further, if the deviation quantity is large, the control quantity (the quantity varying from the initial value) of the conveying speed becomes increased, and if the deviation quantity is small, the control quantity (the quantity varying from the initial value) of the conveying speed becomes decreased, thereby appropriately controlling the conveying speed in accordance with the variations of the thickness.

According to the present invention, further, at least environmental humidity of the environmental humidity and temperature in the electrospinning units can be appropriately maintained for long hours. That is, the dehumidified air is produced by using the dehumidifying agent dried through the hot air produced by the combustion heat generated during the combustion of VOCs, thereby using the dehumidifying agent for long hours and appropriately maintaining the environmental humidity in the electrospinning units for long hours.

According to the present invention, further, the dehumidified air does not mean the air from which humidity is all removed, but it means the air from which humidity is removed up to a given level by means of the dehumidifying agent.

According to the present invention, further, the dehumidifying agent (the wet dehumidifying agent), which produces the dehumidified air and at the same time is wet by the production of the dehumidified air, is dried and regenerated through the hot air produced by the combustion heat generated during the combustion of VOCs.

According to the present invention, further, the air supply unit repeatedly conducts the operation of the production of the dehumidified air and the drying and regeneration of the wet dehumidifying agent, and accordingly, the dehumidifying agent can be used for long hours.

According to the present invention, further, the nanofiber manufacturing apparatus can be applied to a wide variety of fields such as high functionality and high sensitivity textile clothes, health care products, cosmetic products like skin cares, wiping cloths, industrial materials like filters, secondary battery separators, condenser separators, medias of all kinds of catalysts, electronic and machinery materials like all kinds of sensor materials, regeneration medical materials, bio-medical materials, MEMS medical materials, medical materials like bio sensors, and so on.

### [Description of Drawings]

FIGS.1a and 1b are front and plan views showing a nanofiber manufacturing apparatus according to a first embodiment of the present invention.
FIG.2 is a sectional view showing an electrospinning unit used in the nanofiber manufacturing apparatus according to the first embodiment of the present invention.
FIGS.3a and 3b are enlarged sectional and plan views showing the main parts of the electrospinning unit.
FIG.4 is a sectional view showing an auxiliary belt unit moved in a conveying direction 'a' of a long sheet W.
FIGS.5a and 5b show an auxiliary belt in the nanofiber manufacturing apparatus according to the first embodiment of the present invention.
FIG.6 shows an operation of a main control unit used in the nanofiber manufacturing apparatus according to the first embodiment of the present invention.
FIG.7 is a block diagram the operation of the main control unit used in the nanofiber manufacturing apparatus according to the first embodiment of the present invention.
FIG.8 is a graph showing the experimental results of a first experimental example.
FIG.9 is a graph showing the experimental results of a second experimental example.
FIG.10 is a perspective view showing an auxiliary belt position controller.
FIGS.11a to 11e show the operations of the auxiliary belt position controller.
FIGS.12a and 12b are perspective views showing a tension controller in the nanofiber manufacturing apparatus according to the first embodiment of the present invention.
FIG.13 is a front view showing a nanofiber manufacturing apparatus according to a third embodiment of the present invention.
FIG.14 is a front view showing an electrospinning unit in the nanofiber manufacturing apparatus according to the third embodiment of the present invention.
FIG.15 is a sectional view showing a nozzle block in the nanofiber manufacturing apparatus according to the third embodiment of the present invention.
FIGS. 16a to 16d show the main parts of the nozzle block in the nanofiber manufacturing apparatus according to the third embodiment of the present invention.
FIG.17 is a block diagram showing a nanofiber manufacturing apparatus according to a fourth embodiment of the present invention.
FIG.18 is a flow chart showing a nanofiber manufacturing method according to the fourth embodiment of the present invention.
FIGS. 19a to 19f show the movements of the air permeability measurement unit.
FIGS.20a to 20c are graphs showing the time variations of air permeability, mean air permeability, and conveying speed.
FIGS.21a and 21b show a nanofiber manufacturing apparatus according to a fifth embodiment of the present invention.
FIGS.22a and 22b show the movements of a thickness measurement unit in the nanofiber manufacturing apparatus according to the fifth embodiment of the present invention.
FIG.23 is a flow chart showing a nanofiber manufacturing method according to the fifth embodiment of the present invention.
FIGS.24a to 24c are graphs showing the time variations of thickness, mean thickness, and conveying speed.
FIG.25 is a front view showing a nanofiber manufacturing apparatus according to a sixth embodiment of the present invention.
FIG.26 is a plan view showing the nanofiber manufacturing apparatus according to the sixth embodiment of the present invention.
FIG.27 shows an air supply unit in the nanofiber manufacturing apparatus according to the sixth embodiment of the present invention.
FIG.28 is a perspective view showing a dehumidifier of the air supply unit.
FIG.29 is a front view showing an electrospinning unit in the nanofiber manufacturing apparatus according to the sixth embodiment of the present invention.
FIG.30 shows an electrospinning device in conventional practices.

### [Best Mode for Invention]

Hereinafter, an explanation on a nanofiber manufacturing apparatus according to preferred embodiments of the present invention will be in detail given with reference to the attached drawings.

### [First embodiment]

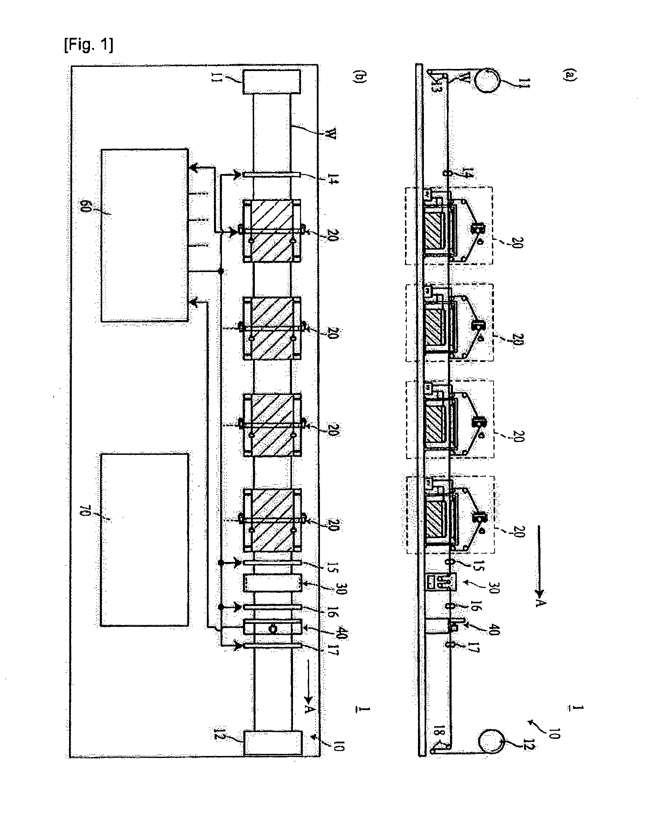

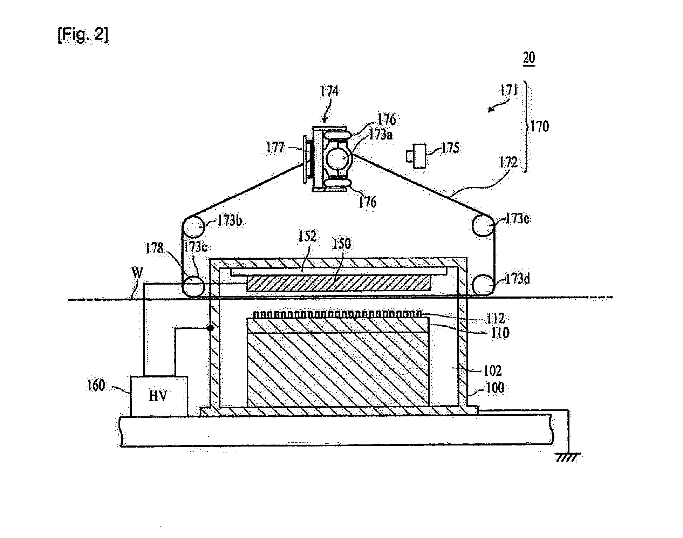

FIGS.1a and 1b are front and plan views showing a nanofiber manufacturing apparatus according to a first embodiment of the present invention. FIG.1a is a front view showing the nanofiber manufacturing apparatus 1 and FIG.1b is a plan view showing the nanofiber manufacturing apparatus 1. In FIGS.1a and 1b, a polymer solution supply unit and a polymer solution collection unit are not shown. Further, some parts of FIG.1a are shown in FIG.2.

FIG.2 is a sectional view showing an electrospinning unit used in the nanofiber manufacturing apparatus according to the first embodiment of the present invention.

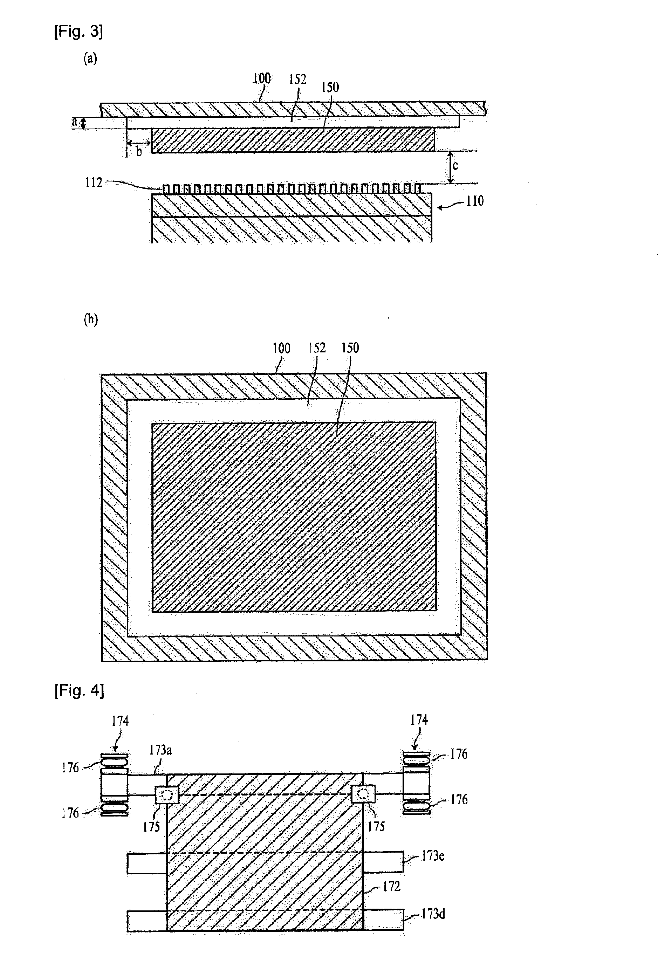

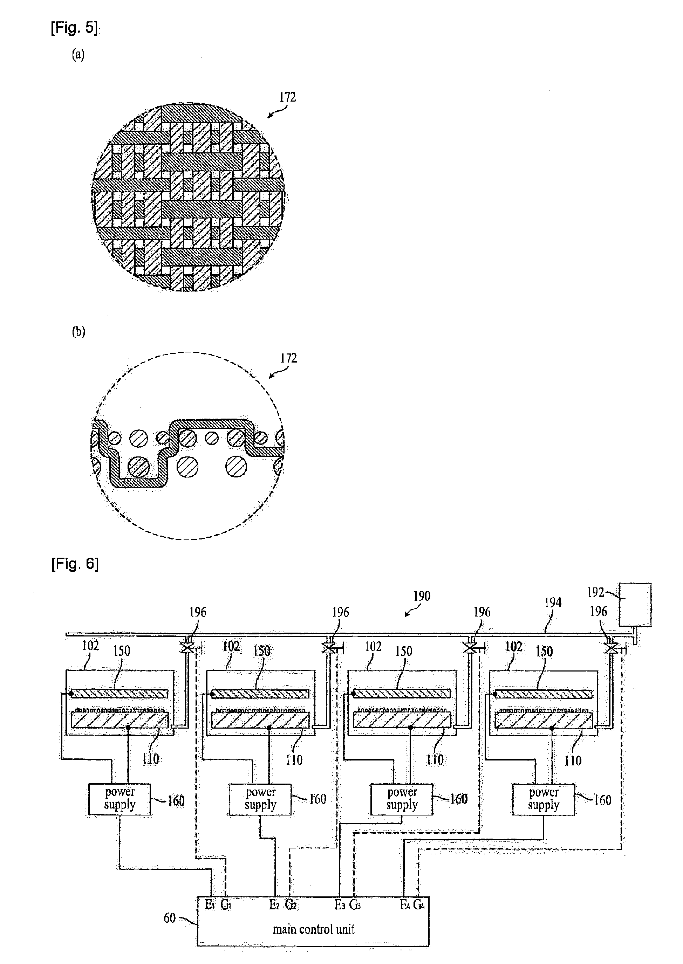

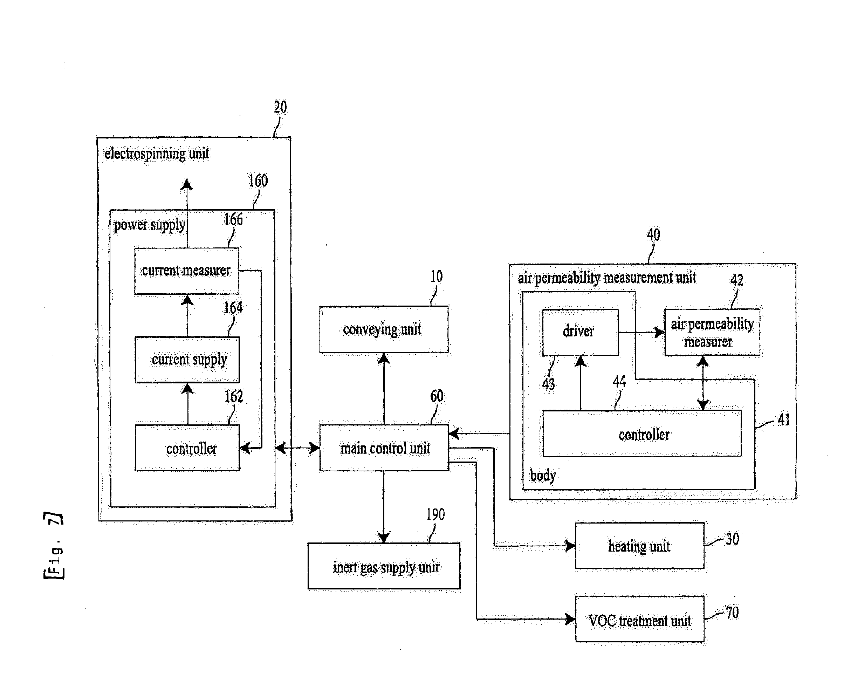

FIGS.3a and 3b are enlarged sectional and plan views showing the main parts of the electrospinning unit, wherein FIG.3a is an enlarged sectional view showing the main parts of the electrospinning unit and FIG.3b is an enlarged plan view showing the main parts of the electrospinning unit. FIG.4 is a sectional view showing an auxiliary belt unit moved in a conveying direction 'a' of a long sheet W. FIGS.5a and 5b show an auxiliary belt in the nanofiber manufacturing apparatus according to the first embodiment of the present invention. FIG.6 shows an operation of a main control unit used in the nanofiber manufacturing apparatus according to the first embodiment of the present invention. FIG.7 is a block diagram the operation of the main control unit used in the nanofiber manufacturing apparatus according to the first embodiment of the present invention.

As shown in FIGS.1a and 1b, the nanofiber manufacturing apparatus 1 according to a first embodiment of the present invention includes a conveying unit 10 adapted to convey a long sheet W at a given conveying speed V, a plurality of electrospinning units 20 disposed serially along a given conveying direction a where the long sheet W is conveyed by means of the conveying unit 10, an air permeability measurement unit 40, and a main control unit 60 adapted to control the conveying unit 10, the electrospinning units 20, a heating unit 30 as will be discussed later, the air permeability measurement unit 40, a VOC treatment unit 70 as will be discussed later, an inert gas supply unit 190 as will be discussed later, the polymer solution supply unit and the polymer solution collection unit.

According to the first embodiment of the present invention, the nanofiber manufacturing apparatus 1 has four electrospinning units 20 disposed serially along the given conveying direction a where the long sheet W is conveyed by means of the conveying unit 10.

According to the first embodiment of the present invention, the nanofiber manufacturing apparatus 1 further includes: the heating unit 30 disposed between one side electrospinning unit 20 and the air permeability measurement unit 40 so as to heat the long sheet W on which nanofibers are accumulated; the VOC treatment unit 70 adapted to burn and remove the volatile organic compounds generated when the nanofibers are accumulated on the long sheet W; and the inert gas supply unit 190 (See FIGS.6 and 7) adapted to receive signals from the main control unit 60 and thus to supply inert gas to an electrospinning chamber 102 of the electrospinning unit 20 where a trouble is detected.

As shown in FIGS.1a and 1b, the conveying unit 10 includes a long sheet injection roller 11, a long sheet winding roller 12, auxiliary rollers 13, 18 and driving rollers 14, 15, 16, 17 located between the injection roller 11 and the winding roller 12. The injection roller 11, the winding roller 12 and the driving rollers 14, 15, 16, 17 are rotated by means of driving motors not shown in the drawing.

As shown in FIG.2, each electrospinning unit 20 includes a conductive case 100, a collector 150 attached to the case 100 by means of an insulation member 152, a nozzle block 110 disposed to face the collector 150 and having a plurality of nozzles 112 from which a polymer solution is ejected mounted thereon, a power supply 160 adapted to apply a high voltage to a space between the collector 150 and the nozzle block 110, the electrospinning chamber 102 adapted to provide a given space in which the collector 150 and the nozzle block 110 are enclosed, and an auxiliary belt unit 170 adapted to help the conveying of the long sheet W.

As shown in FIGS.2 to 3b, the nozzle block 110 has the plurality of nozzles 112 adapted to upwardly eject the polymer solution from the ejection holes. Further, the nanofiber manufacturing apparatus 1 conducts the electrospinning of the nanofibers by the overflowing ejection of the polymer solution from the ejection holes of the plurality of upward nozzles 112, and at the same time collects the polymer solution overflowing from the ejection holes of the plurality of upward nozzles 112, so that the collected polymer solution is reused as the material of the nanofibers. The nozzle block 110 is directly grounded or grounded through the case 100. Hereinafter, the upward nozzles 112 are simply referred to as nozzles 112.

Further, the nanofiber manufacturing apparatus 1 has the nozzle block 100 having various sizes and shapes, but for example, when the nozzle block 110 is seen from the top surface, it has a rectangular shape (inclusive of a square shape) having one side size between 0.5m and 3m. Furthermore, the nozzles 112 are arranged in for example pitches between 1.5cm and 6.0cm. The number of nozzles 112 is 36 (when the same number of nozzles is arranged on horizontal and vertical lines, 6 x 6 = 36) to 21,904 (when the same number of nozzles is arranged on horizontal and vertical lines, 148 x 148 = 21,904).

As mentioned above, the collector 150 is attached to the conductive case 100 by means of the insulation member 152. The positive electrode of the power supply 160 is connected to the collector 150, and the negative electrode thereof to the nozzle block 110 and the case 100. As shown in FIG.3a, when the collector 150 is seen from the nozzle block 110, the outer edge of the insulation member 152 is located more outwardly than the outer edge of the collector 150. If it is assumed that the thickness of the insulation member 152 is a and the distance between the outer edge of the insulation member 152 and the outer edge of the collector 150 is b, it is satisfied that a ≥ 6mm and a+b ≥ 50mm.

The insulation member 152 is desirably made of for example polyamide, polyacetal, polycarbonate, modified poly phenylene ether, poly butylene terephthalate, polyethylene terephthalate, non-crystal polyalylate, polysulfone, polyether sulfone, polyphenylene sulfide, polyether ether ketone, polyimide, polyethyl imide, fluorine resin, liquid crystal polymer, polypropylene, high density polyethylene, or polyethylene.

If it is assumed that the distance between the top ends of the plurality of nozzles 112 and the collector 150 is c, it is satisfied that 300mm ≥ c ≥ 100mm.

As shown in FIG.2, the auxiliary belt unit 170 includes the auxiliary belt 172 formed of an insulative porous endless belt located and freely rotated at a position encompassing the collector 150 and an auxiliary belt driver 171 adapted to rotate the auxiliary belt 172 to a rotating speed corresponding to the conveying speed of the long sheet W.

As shown in FIG.2 or 4, the auxiliary belt unit 170 is the endless belt having net-shaped base materials made by weaving yarns having a diameter of 0.1mm to 2.0mm in such a manner as to be laminated on top of each other, and having an opening rate in the range between 1% and 40% and a width larger than that of the collector 150 corresponding to the long sheet W. So as to make the belt, in more detail, a first layer where polyethylene yarns having diameters of 0.27mm and 0.18mm are in turn arranged and a second layer where polyacetylene having a diameter of 0.35mm and polyethylene yarn having a diameter of 0.35mm are in turn arranged are woven with warp yarns, that is, polyethylene yarn having a diameter of 0.25mm to make a net-shaped base material (See FIG.5a), and then, the net-shaped base materials are laminated to have a structure of 2.5 stories (See FIG.5b). Further, the auxiliary belt 172 has a width of 2m, a plurality of holes formed thereon, and an opening rate of 4%, and one circumference length of the auxiliary belt 172 corresponds to the length of the collector 150. For example, the auxiliary belt 172 has one circumference length of 6m.

As shown in FIGS.2 and 4, the auxiliary belt driver 171 includes five auxiliary belt rollers 173a to 173e (hereinafter, referred simply to as 173) on which the auxiliary belt 172 is rolled, a driving motor (not shown) for rotating the auxiliary belt rollers 173, an auxiliary belt position controller 174 for controlling the position of the auxiliary belt 172 with respect to the width direction of the auxiliary belt roller 173a, auxiliary belt position measurement sensors 175 for measuring the position of the width direction of the auxiliary belt roller 173a, and a tension controller 178 for controlling the tension applied to the auxiliary belt 172.

Each auxiliary belt roller 173 on which the auxiliary belt 172 is rolled has a length of 2.2m in the width direction thereof. The auxiliary belt roller 173a receives the signal from the auxiliary belt position controller 174, and according to the received signal, the position of the auxiliary belt roller 173a is controlled on one side end portion thereof toward the outside of the auxiliary belt 172 from the inside thereof. The auxiliary belt roller 173c receives the signal from the tension controller 178, and according to the received signal, the position of the auxiliary belt roller 173c is controlled toward the outside of the auxiliary belt 172 from the inside thereof.

The auxiliary belt position controller 174 includes a pair of air springs 176 located up and down to place a support shaft attached to both side end portions of the auxiliary belt roller 173a therebetween and an expanded quantity controller 177 for controlling the quantities of the expansion of the pair of air springs 176 independently of each other.

Based upon the measuring result of the auxiliary belt position measurement sensors 175, one side end portion of the auxiliary belt roller 173a is inclinedly moved up and down, and at this time, the expanded quantity controller 177 controls the expanded quantities of the air springs 176 to allow the auxiliary belt 172 to be located at a position corresponding to the width direction of the long sheet W.

The pair of air springs 176 allows one side end portion of the auxiliary belt roller 173a to move up and down, thereby inclining the auxiliary belt roller 173a. For example, the lower side air spring is expanded, and the upper side air spring is compressed, so that one side end portion of the auxiliary belt roller 173a is moved up and down and thus inclined. Alternatively, the lower side air spring is compressed, and the upper side air spring is expanded, so that the support shaft of the auxiliary belt roller 173a is moved down and thus inclined. General air springs can be used as the pair of air springs 176.

The auxiliary belt position measurement sensors 175 are position sensors for measuring the position of the auxiliary belt 172 with respect to the width direction of the auxiliary belt roller 173a and send the measured results to the auxiliary belt position controller 174. The auxiliary belt position measurement sensors 175 make use of cameras.

The tension controller 178 measures the tension applied to the auxiliary belt 172 to move the auxiliary belt 172 by an air pressure, thereby controlling the tension applied to the auxiliary belt 172. Further, the tension controller 178 is used when the auxiliary belt 172 is mounted on the auxiliary belt rollers 173 or detached therefrom.

As shown in FIG.7, the power supply 160 includes: a current supply 164; a current measurer 166 for measuring the current from the current supply 164; and a controller 162 for controlling the operation of the current supply 164 and at the same time processing the measured result of the current measurer 166. Further, as shown in FIG.6, the power supply 160 applies a high voltage to the collector 150 and the plurality of nozzles 112 and at the same time measures the quantity of current supplied therefrom to send the measured value to the main control unit 60. Also, if the power supply 160 receives a current supply stop signal from the main control unit 60, it stops the power supply.

The heating unit 30 is disposed between the electrospinning unit 20 and the air permeability measurement unit 40 to heat the long sheet W on which the nanofibers are accumulated. The heating temperature is dependent upon the kinds of long sheet W or nanofibers, but for example, the heating unit 30 can heat the long sheet W to a temperature between 50°C and 300°C.

The air permeability measurement unit 40 measures the air permeability P of the long sheet W on which the nanofibers are accumulated, which will be described in detail with reference to a fourth embodiment of the present invention.

As shown in FIG.6, the inert gas supply unit 190 includes an inert gas bombe 192 for supplying inert gas, inert gas supply lines 194 for supplying the inert gas to each electrospinning chamber 102, and opening/closing valves 196 for controlling the supply of the inert gas in accordance with the signal of the main control unit 60.

The main control unit 60 controls the conveying unit 10, the electrospinning units 20, the heating unit 30, the air permeability measurement unit 40, the VOC treatment unit 70, the inert gas supply unit 190, the polymer solution supply unit and the polymer solution collection unit. The VOC treatment unit 70 burns and removes the volatile organic compounds generated when the nanofibers are accumulated on the long sheet W.

A method for manufacturing a nanofiber non-woven fabric using the nanofiber manufacturing apparatus 1 according to the first embodiment of the present invention will be explained.

First, the long sheet W is set to the conveying unit 10, and the long sheet W is conveyed from the injection roller 11 to the winding roller 12 at the given conveying speed V. Next, the nanofibers are sequentially accumulated on the long sheet W through the plurality of electrospinning units 20. After that, the long sheet W on which the nanofibers are accumulated is heated by means of the heating unit 30. Accordingly, the long sheet W on which the nanofibers are accumulated is manufactured as the nanofiber non-woven fabric.

Here, the spinning conditions in the nanofiber manufacturing method will be explained, and further, they will be the same as other embodiments as will be discussed later.

The long sheet W makes use of non-woven fabric, woven fabric or knitted fabric made of all kinds of materials. For example, the long sheet W has a thickness between 5µm and 500µm and a length between 10m and 10km.

The polymer used as the material of the nanofibers includes polylactic acid (PLA), polypropylene (PP), polyvinyl acetate (PVAc), polyethylene terephthalate (PET), polybutylene terephthalate (PBT), polyethylene naphthalate (PEN), polyamide (PA), polyurethane (PUR), poly vinyl alcohol (PVA), polyacrylonitrile (PAN), polyether imide (PEI), polycaprolactone (PCL), polylactic-glycolic acid (PLGA), silk, cellulose, chitosan, and the like.

The solvent used in the polymer solution includes dichloromethane, dimethyformamide, dimethylsulfoxide, methyl ethyl ketone, chloroform, acetone, water, formic acid, acetic acid, cyclohexane, THF and so on. The plurality of solvents may be mixed. In the polymer solution, additives like a conductivity improvement agent may be contained.

Further, the conveying speed V is set for example to the range between 2m/min and 100m/min. The voltage applied to the nozzle block 110 and the collector 150 is set to the range between 10kV and 80kV, and according to the present invention, desirably, to about 50kV.

According to the first embodiment of the present invention, the case 100 or the nozzle block 110 in the nanofiber manufacturing apparatus 1 is grounded, so that all of the nozzle block 110, the material tank in which the polymer solution is stored before the ejection from the nozzles 112, and polymer solution transferring instruments (for example, pipes or pumps) for transferring the polymer solution to the nozzle block 110 from the material tank become ground potentials, so that there is no need to provide high potential voltage specifications of the material tank or the polymer solution transferring instruments in the same manner as the electrospinning device as disclosed in the cited document. Accordingly, the complication of the electrospinning unit, which is caused by the high potential voltage specifications of the material tank or the polymer solution transferring instruments, can be prevented.

According to the first embodiment of the present invention, when the collector 150 is seen from the nozzle block 110, if it is assumed that the thickness of the insulation member 152 is a and the distance between the outer edge of the insulation member 152 and the outer edge of the collector 150 is b, it is satisfied that a ≥ 6mm and a+b ≥ 50mm, so that the insulation state between the collector 150 and the case 100 or other members is sufficiently good, and as will be apparent from the examples as will be explained later, even if a voltage of 35kV is applied between the nozzle block 110and the collector 350 to conduct the electrospinning, the insulation breakdown between the collector 150 and the case 100 or other members does not occur. Further, leak current is limited to a given range. As a result, according to the nanofiber manufacturing apparatus 1, possibilities where the operations of the electrospinning units stop are reduced to an extremely low level, so that the electrospinning units can be continuously operated for long hours to stably produce the nanofibers having desired performance in large quantities.

### [Example 1]

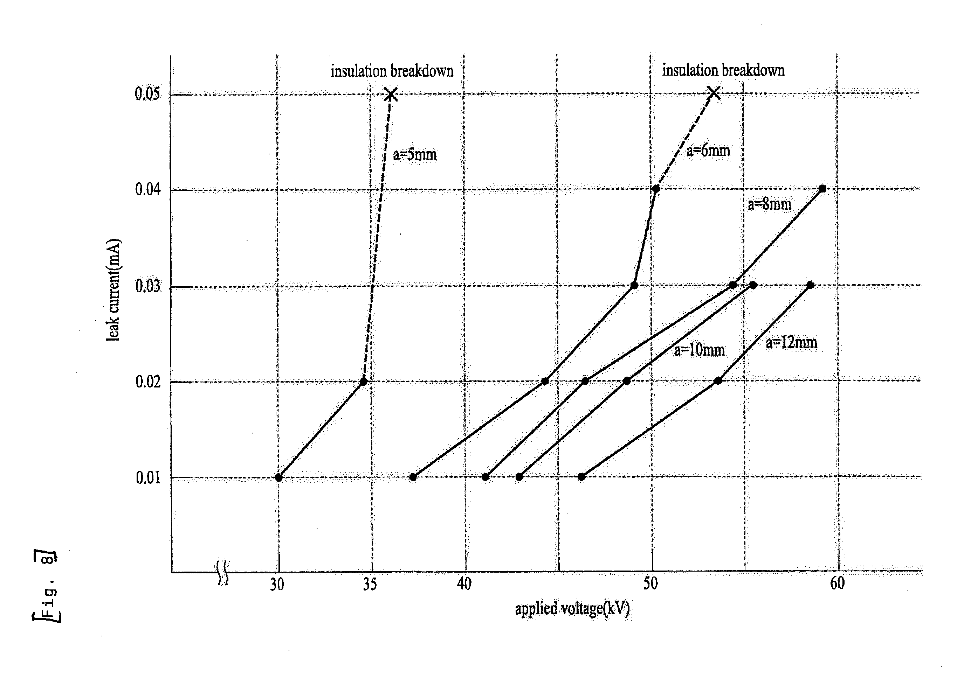

Example 1 is the experimental example clearly showing the appropriate thickness a of the insulation member 152, so as to stop the leak current at the given range. Table 1 shows the experimental results of the example 1, and FIG.8 is a graph showing the experimental results of the example 1.

**Table 1**

| a=5mm | | a=6mm | | a=8mm | | a=10mm | | a=12mm | |
|---|---|---|---|---|---|---|---|---|---|
| mA | kV | mA | kV | mA | kV | mA | kV | mA | kV |
| 0.01 | 29.8 | 0.01 | 37.2 | 0.01 | 41.0 | 0.01 | 43.0 | 0.01 | 46.3 |
| 0.02 | 34.4 | 0.02 | 44.3 | 0.02 | 46.6 | 0.02 | 49.0 | 0.02 | 54.0 |
| 0.03 | | 0.03 | 49.1 | 0.03 | 54.8 | 0.03 | 56.0 | 0.03 | 59.0 |
| 0.04 | | 0.04 | 50.3 | 0.04 | 59.7 | 0.04 | | 0.04 | |
| Insulation Break-down | 36.0 | | 53.4 | | | | | | |
| *b is fixed to 30mm | | | | | | | | | |

In the example 1, in the state where the polymer solution was not fed to the nozzle block 110 in the nanofiber manufacturing apparatus 1 according to the present invention (wherein, the thickness a was set to 5mm, 6mm, 8mm, 10mm or 12mm, and the distance b was fixed to 30mm), the voltage was applied between the collector 150 and the nozzle block 110 to allow a given current supplied from the power supply 160 to become a given current (for example, 0.01mA, 0.02mA, 0.03mA, and 0.04mA). At this time, the leak current and the applied voltage were on the graph.

As appreciated from Table 1 and FIG.8, if the thickness a of the insulation member 152 was over 6mm, when the voltage of 35kV was applied between the collector 150 and the nozzle block 110, it was possible to suppress the leak current to 0.01mA. Further, if the thickness a of the insulation member 152 was over 12mm, when the voltage of 45kV was applied between the collector 150 and the nozzle block 110, it was possible to suppress the leak current to 0.01mA.

### [Example 2]

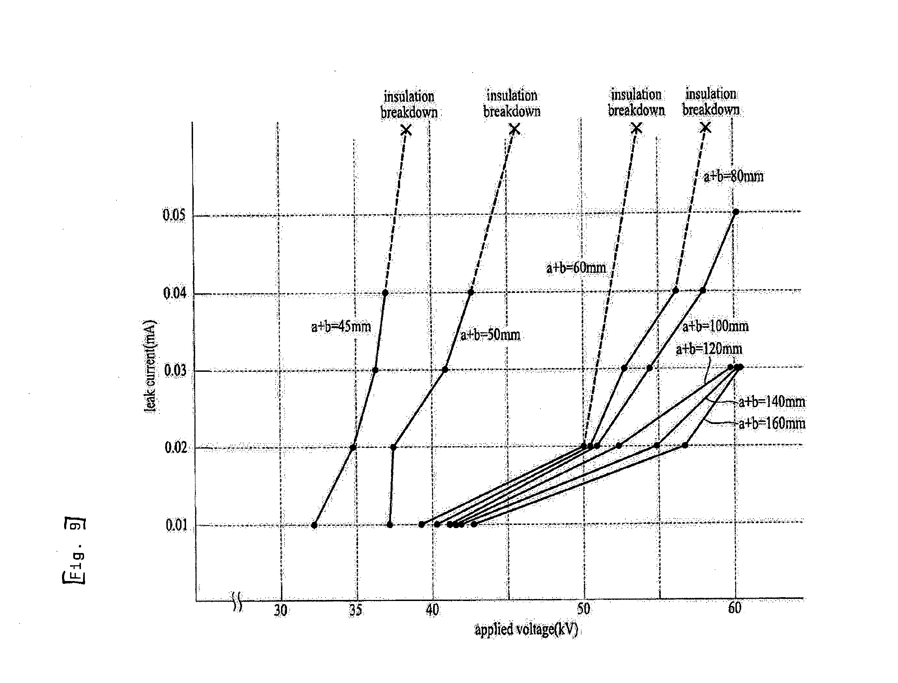

Example 2 is the experimental example clearly showing the appropriate distance a+b between the insulation member 152 and the collector 150, so as to stop the leak current at the given range. Table 2 shows the experimental results of the example 2, and FIG.9 is a graph showing the experimental results of the example 2.

**Table 2**

| a+b=45mm | | a+b=50mm | | a+b=60mm | | a+b=80mm | |
|---|---|---|---|---|---|---|---|
| mA | kV | mA | kV | mA | kV | mA | kV |
| 0.01 | 32.2 | 0.01 | 37.0 | 0.01 | 39.2 | 0.01 | 40.3 |
| 0.02 | 34.8 | 0.02 | 37.3 | 0.02 | 50.2 | 0.02 | 50.7 |
| 0.03 | 36.3 | 0.03 | 40.8 | 0.03 | | 0.03 | 53.0 |
| 0.04 | 37.0 | 0.04 | 42.6 | 0.04 | | 0.04 | 56.5 |
| 0.05 | - | 0.05 | - | 0.05 | | 0.05 | |
| Insulatio n Breakdown | - | | 46.0 | | 54.0 | | 58.8 |
| *a is fixed to 40mm | | | | | | | |
| | | | | | | | |

| a+b=100mm | | a+b=120mm | | a+b=140mm | | a+b=160mm | |
|---|---|---|---|---|---|---|---|
| mA | kV | mA | kV | mA | kV | mA | kV |
| 0.01 | 41.2 | 0.01 | 41.7 | 0.01 | 41.8 | 0.01 | 42.8 |
| 0.02 | 50.9 | 0.02 | 52.7 | 0.02 | 55.3 | 0.02 | 57.1 |
| 0.03 | 54.8 | 0.03 | 60.3 | 0.03 | 60.5 | 0.03 | 60.8 |
| 0.04 | 57.3 | 0.04 | - | 0.04 | - | 0.04 | - |
| 0.05 | 60.7 | 0.05 | - | 0.05 | - | 0.05 | - |
| Insulatio n Breakdown | - | | - | | - | | - |
| *a is fixed to 40mm | | | | | | | |

In the example 2, in the state where the polymer solution was not fed to the nozzle block 110 in the nanofiber manufacturing apparatus 1 according to the present invention (wherein, the distance a+b was set to 45mm, 50mm, 60mm, 80mm, 100mm, 120mm, 140mm or 160mm, and the thickness a was fixed to 40mm), the voltage was applied between the collector 150 and the nozzle block 110 to allow a given current supplied from the power supply 160 to become a given current (for example, 0.01mA, 0.02mA, 0.03mA, 0.04mA and 0.05mA). At this time, the leak current and the applied voltage were on the graph.

As appreciated from Table 2 and FIG.9, if the distance a+b was over 50mm, when the voltage of 35kV was applied between the collector 150 and the nozzle block 110, it was possible to suppress the leak current to 0.01mA.

As appreciated from the examples 1 and 2, when it is assumed that the thickness of the insulation member 152 is a and the distance between the outer edge of the insulation member 152 and the outer edge of the collector 150 is b, if it is satisfied that a ≥ 6mm and a+b ≥ 50mm, it is possible to suppress the leak current not utilized for the electrospinning to an extremely low value. Accordingly, it is possible that the difference between a given quantity of first set current as an upper limited quantity of threshold current at which the trouble on the electrospinning unit occurs and a quantity of current upon the normal operation of the electrospinning unit, or the difference between the difference between a given quantity of second set current as a lower limited quantity of threshold current at which the trouble on the electrospinning unit occurs and a quantity of current upon the normal operation of the electrospinning unit is defined as an extremely low value. As a result, it is possible to early find the trouble of the electrospinning unit, thereby providing the nanofiber manufacturing apparatus having excellent stability.

By the way, while the long sheet W is being conveyed from the injection roller 11 to the winding roller 12 at the given conveying speed V, the nanofibers are sequentially accumulated on the long sheet W through the plurality of electrospinning units 20, and according to the first embodiment of the present invention, in this case, the control of the position of the auxiliary belt 172 should be conducted. Hereinafter, an explanation on the position control of the auxiliary belt 172 will be given.

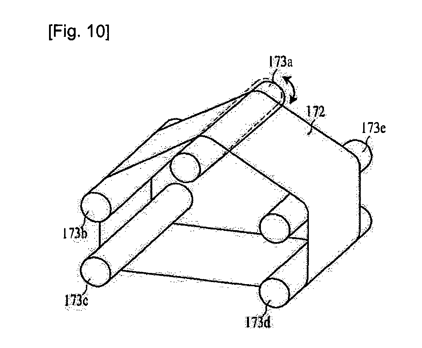

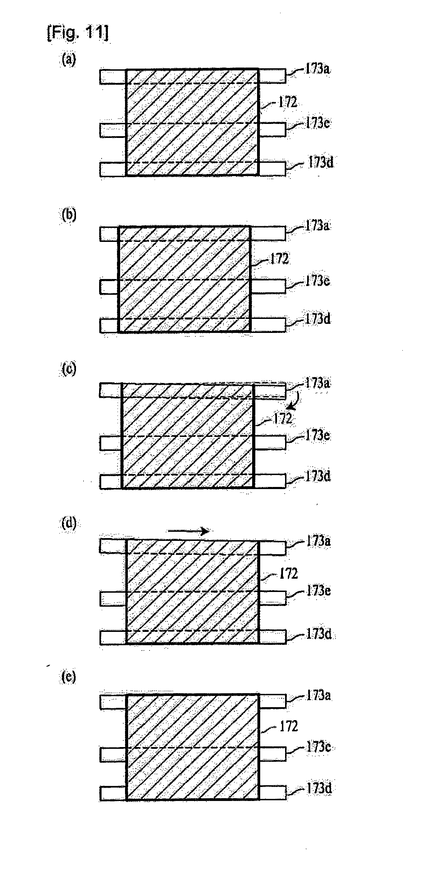

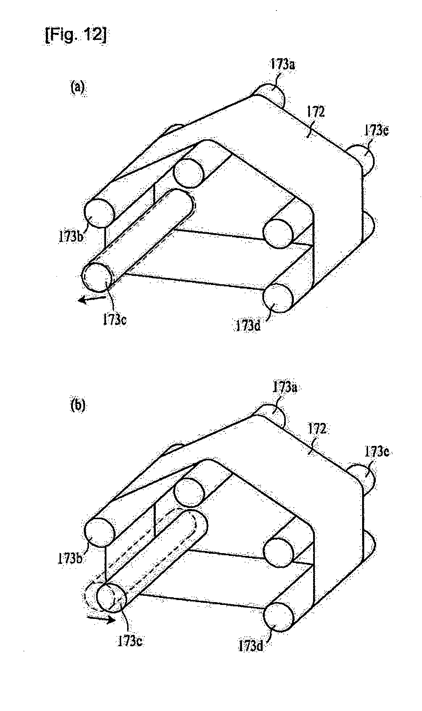

FIG.10 is a perspective view showing an auxiliary belt position controller, FIGS.11a to 11e show the operations of the auxiliary belt position controller, and FIGS.12a and 12b are perspective views showing a tension controller in the nanofiber manufacturing apparatus according to the first embodiment of the present invention. FIG.12a shows the operation of the tension controller 178 when the tension applied to the auxiliary belt 172 is controlled, and FIG.12b shows the operation of the tension controller 178 when the auxiliary belt 172 is separated from the auxiliary belt rollers. As shown in FIGS.10 to 12b, for the brevity of the drawing, the parts except the auxiliary belt 172 and the auxiliary belt rollers 173 will be not shown.

First, the long sheet W is set to the conveying unit 10, and the long sheet W is conveyed from the ejection roller 11 to the winding roller 12 at the given conveying speed V. Next, the nanofibers are sequentially accumulated on the long sheet W through the plurality of electrospinning units 20. After that, the long sheet W on which the nanofibers are accumulated is heated by means of the heating unit 30. Accordingly, the long sheet W on which the nanofibers are accumulated is manufactured as the nanofiber non-woven fabric.

At this time, the auxiliary belt unit 170 rotates the auxiliary belt 172 to the rotating speed corresponding to the conveying speed of the long sheet W. At the same time, the position of the auxiliary belt 172 with respect to the width direction of the auxiliary belt roller 173a is measured by means of the auxiliary belt position measurement sensors 175, and the tension applied to the auxiliary belt 172 is measured by means of the tension controller 178.

At this time, through the measurement of the auxiliary belt position measurement sensors 175, if it is found that the position of the auxiliary belt 172 with respect to the width direction of the auxiliary belt roller 173a is deviated from a given position, as shown in FIG.4, the auxiliary belt position controller 174 moves the position of the auxiliary belt 172 with respect to the width direction of the auxiliary belt roller 173a to the given position.

For example, the auxiliary belt 172 has to be moved to the right side of the drawing (See FIGS.11a and 11b). In this case, if the measured result of the auxiliary belt position measurement sensors 175 is sent to the auxiliary belt position controller 174, the auxiliary belt position controller 174 calculates the displacement quantity downwardly moving one side end portion (the right end portion) of the auxiliary belt roller 173a and calculates the expanded quantity of one pair of air springs 176, based upon the calculated displacement quantity, thereby controlling the pair of air springs 176 (See FIG.11c). As a result, the auxiliary belt 172 being rotated is moved to the right side (See FIG.11d) and finally moved to the given right position (See FIG. 11e).

When it is found that the tension being applied to the auxiliary belt 172 is released through the measurement of the tension controller 178, as shown in FIG.12a, the auxiliary belt roller 173c is moved from the inside of the auxiliary belt 172 toward the outside thereof, thereby improving the tension applied to the auxiliary belt 172.

Further, as shown in FIG.12b, when the operation where the auxiliary belt 172 is wound and rotated on the plurality of auxiliary belt rollers 173 upon the start of the electrospinning and the operation where the auxiliary belt 172 is separated from the plurality of auxiliary belt rollers 173 upon the completion of the electrospinning are conducted, the auxiliary belt roller 173c is moved from the inside of the auxiliary belt 172 toward the outside thereof, thereby easily conducting the corresponding operations.

According to the first embodiment of the present invention, the auxiliary belt unit 170 of the nanofiber manufacturing apparatus 1 includes the auxiliary belt 172 formed of the insulative porous endless belt located and freely rotated at a position encompassing the collector 150 and the auxiliary belt driver 171 adapted to rotate the auxiliary belt 172 to a rotating speed corresponding to the conveying speed of the long sheet W, so that even if large electrostatic attraction between the collector 150 and the long sheet W occurs, the auxiliary belt 172 exists between the long sheet W and the collector 150 to prevent the long sheet W from being pulled toward the collector 150 or to avoid the interference in the gentle conveying of the long sheet W. Accordingly, it is possible to conduct the electrospinning of the nanofibers under the uniform conditions, and of course, the operation itself of the electrospinning units 20 does not stop at all. Further, it is possible to produce the nanofibers having uniform qualities (for example, in the diameters of nanofibers, in the distribution of the diameters of nanofibers, in the accumulation quantities of nanofibers, in the thickness of nanofiber non-woven fabric, and in the air permeability of nanofiber non-woven fabric and so on) in large quantities.

According to the first embodiment of the present invention, the auxiliary belt 172 is rotated to the rotating speed corresponding to the conveying speed of the long sheet W, so that the existence of the auxiliary belt 172 gives no bad influence on the conveying state of the long sheet W. According to the electrospinning units 20, further, the auxiliary belt 172 is formed of the insulative porous endless belt, thereby giving no big influence on the distribution of the electric field between the collector 150 and the nozzle block 110.

According to the first embodiment of the present invention, the auxiliary belt driver 171 of the nanofiber manufacturing apparatus 1 includes the plurality of auxiliary belt rollers 173 on which the auxiliary belt 172 is wound and rotated and the driving motor for rotating the auxiliary belt rollers 173c, thereby allowing the auxiliary belt 172 to be surely rotated to the rotating speed corresponding to the conveying speed of the long sheet W.

According to the first embodiment of the present invention, the auxiliary belt driver 171 includes the auxiliary belt position controller 174 for controlling the position of the auxiliary belt 172 with respect to the width direction of the auxiliary belt roller 173a, through the control of the position of the auxiliary belt roller 173a on one side end portion thereof from the inside of the auxiliary belt 172 to the outside thereof, so that the inclination of the auxiliary belt roller 173a is appropriately controlled and the position of the auxiliary belt 172 with respect to the width direction of the auxiliary belt roller 173a is controlled for long hours.

According to the first embodiment of the present invention, the auxiliary belt position controller 174 of the nanofiber manufacturing apparatus 1 includes one pair of air springs 176 located up and down to place the support shaft attached to one side end portion of the auxiliary belt roller 173a therebetween and the expanded quantity controller 177 for controlling the quantities of the expansion of the pair of air springs 176 independently of each other, so that the position of the auxiliary belt 172 with respect to the width direction of the auxiliary belt roller 173a can be gently controlled.

According to the first embodiment of the present invention, the auxiliary belt driver 171 of the nanofiber manufacturing apparatus 1 further includes the auxiliary belt position measurement sensors 175 for measuring the position of the auxiliary belt 172 with respect to the width direction of the auxiliary belt roller 173a, thereby controlling the position of the auxiliary belt 172 with respect to the width direction of the auxiliary belt roller 173a through the measurement result of the auxiliary belt position measurement sensors 175, so that the position of the auxiliary belt 172 with respect to the width direction of the auxiliary belt roller 173a can be more gently controlled.

According to the first embodiment of the present invention, the auxiliary belt driver 171 of the nanofiber manufacturing apparatus 1 further includes the tension controller 178 for controlling the tension applied to the auxiliary belt 172 through the control of the position of the auxiliary belt roller 173c from the inside of the auxiliary belt 172 toward the outside thereof, so that even if large electrostatic attraction between the collector 150 and the long sheet W occurs, the tension of the auxiliary belt 172 is adjustable to a large value resistant to the corresponding electrostatic attraction to prevent the long sheet W from being pulled toward the collector 150 or to avoid the interference in the gentle conveying of the long sheet W.

According to the first embodiment of the present invention, the tension controller 178 of the nanofiber manufacturing apparatus 1 controls the position of the auxiliary belt roller 173c from the inside of the auxiliary belt 172 toward the outside thereof to allow the auxiliary belt roller 173c to be located at the position where the operation where the auxiliary belt 172 is wound and rotated on the plurality of auxiliary belt rollers 173 and the operation where the auxiliary belt 172 is separated from the plurality of auxiliary belt rollers 173 are easily conducted, so that the operations where the auxiliary belt 172 is wound and rotated on the plurality of auxiliary belt rollers 173 and separated therefrom can be easily conducted.

According to the first embodiment of the present invention, the auxiliary belt 172 of the nanofiber manufacturing apparatus 1 has the width larger than that of the collector 150 corresponding to the long sheet W, thereby being surely located between the long sheet W and the collector 150, thereby preventing the long sheet W from being pulled toward the collector 150 or giving no bad influence on the gentle conveying of the long sheet W.

According to the first embodiment of the present invention, one auxiliary belt is mounted per one electrospinning unit. However, the present invention is not limited thereto and is applicable to a nanofiber manufacturing apparatus having one or a plurality of auxiliary belts mounted to surround two to all of the collectors and an auxiliary belt driver for rotating the one or plurality of auxiliary belts to the rotating speed corresponding to the conveying speed of the long sheet W.

### [Second embodiment]

According to a second embodiment of the present invention, a nanofiber manufacturing apparatus is configured to immediately detect the trouble occurring from just one electrospinning unit among a plurality of electrospinning units, while the electrospinning units are being continuously operated for long hours.

The configuration of the nanofiber manufacturing apparatus according to the second embodiment of the present invention is basically the same as that according to the first embodiment of the present invention, and therefore, it is not separately illustrated in the drawing.

According to the nanofiber manufacturing apparatus, while the electrospinning is being conducted in the state where the voltage of 35kV is applied between the collector 150 and the nozzle block 110, for example, if it is detected that a higher current than 0.24mA is supplied from one or a plurality of power supplies 160, the main control unit 60 (See FIG.6) transmits a current supply stop signal for stopping the current supply from the one or plurality of power supplies 160.

Further, if it is detected that a lower current than 0.18mA is supplied from one or a plurality of power supplies 160, the main control unit 60 transmits a warning signal (for example, a warning sound signal or a warning indicating signal) for indicating the trouble of the electrospinning unit 20 where the one or the plurality of power supplies 160 are connected.

Like this, according to the second embodiment of the present invention, the nanofiber manufacturing apparatus can immediately detect the trouble occurring from just one electrospinning unit among the plurality of electrospinning units 20, thereby achieving high stability in operation. At this time, the operation of the electrospinning unit 20 having the trouble stops, and the others are still operated, thereby completing the nanofiber manufacturing process without any stop.

Further, when the main control unit 60 transmits the current supply stop signal for stopping the current supply from the one or plurality of power supplies 160, it also transmits a conveying speed reduction signal for reducing the conveying speed of the conveying unit 10, so that the quantity of nanofibers per unit area accumulated on the long sheet W is in a given range. Accordingly, even when the operation of the electrospinning unit 20 having the trouble stops, the conveying speed is reduced to allow the quantity of nanofibers accumulated per unit area on the long sheet W to be in a given range.

At this time, if it is assumed that the number of power supplies 160 conducting the current supply for a first period of time T1 before the reduction of the conveying speed is n and the number of power supplies 160 conducting the current supply for a second period of time T2 after the reduction of the conveying speed is m, the conveying speed V2 for the second period of time T2 is set by m/n times to the conveying speed V1 for the first period of time T1 under the control of the main control unit 60. Through the control, it is possible that the quantity of nanofibers per unit area accumulated on the long sheet W is in the given range. The control of the conveying speed V is conducted by the control of the rotating speeds of the drive rollers 14, 15, 16, 17.

Further, when the main control unit 60 transmits the current supply stop signal for stopping the current supply from the one or plurality of power supplies 160, it also transmits an inert gas supply signal to the inert gas supply unit 190 (See FIG.7) for supplying the inert gas to the electrospinning chamber 102 of the electrospinning unit 20 connected to the one or the plurality of power supplies 160. Accordingly, the accidents caused by flame can be previously prevented, thereby providing the nanofiber manufacturing apparatus having high stability.

According to the second embodiment of the present invention, while the electrospinning units are being continuously operated for long hours, if one electrospinning unit among the plurality of electrospinning units has a trouble (if a larger current than a given quantity of first set current is supplied from one or a plurality of power supplies), the nanofiber manufacturing apparatus can immediately detect the trouble through the main control unit 60 conducting the above-mentioned control operations, thereby providing the nanofiber manufacturing apparatus having high stability.

Further, according to the second embodiment of the present invention, while the electrospinning units are being continuously operated for long hours, even if one electrospinning unit among the plurality of electrospinning units has a trouble, the nanofiber manufacturing apparatus just stops the operation of the electrospinning unit having the trouble and keeps the operations of the others, thereby completing the nanofiber manufacturing process without any stop.

According to the second embodiment of the present invention, there is no separate need to set any references for satisfying the trouble on the electrospinning units. As a result, the nanofiber manufacturing apparatus can produce the nanofibers in large quantities, while having high stability.

### [Third embodiment]

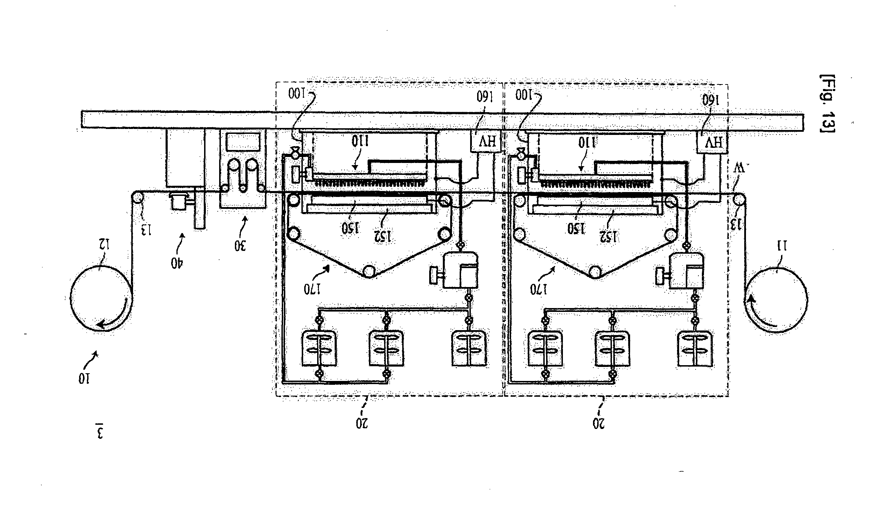

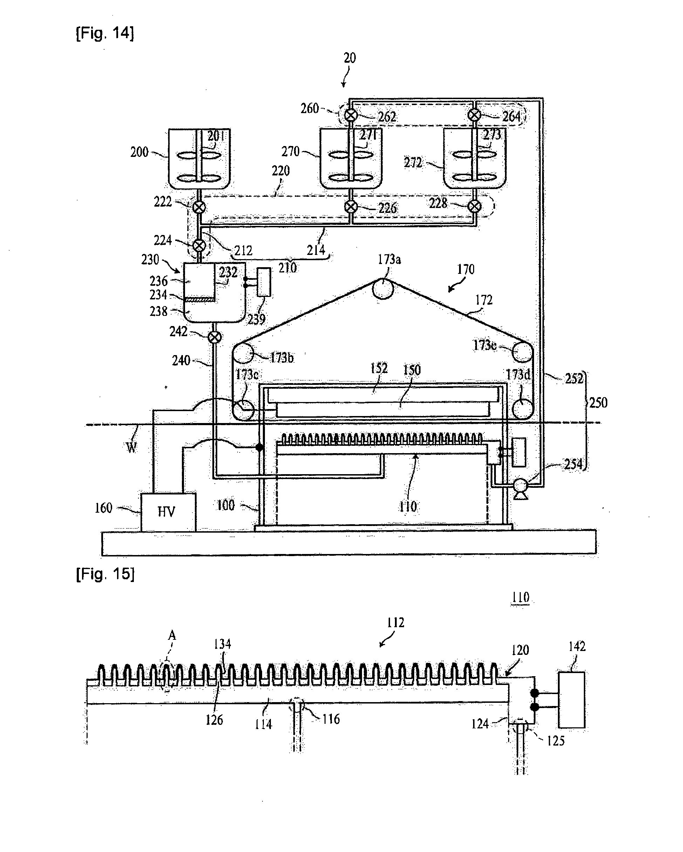

FIG.13 is a front view showing a nanofiber manufacturing apparatus according to a third embodiment of the present invention. FIG.14 is a front view showing an electrospinning unit in the nanofiber manufacturing apparatus according to the third embodiment of the present invention. In FIGS.13 and 14, a nozzle block 110, a material tank 200, an intermediate tank 230, regeneration tanks 270 and 272 are shown by sectional views.

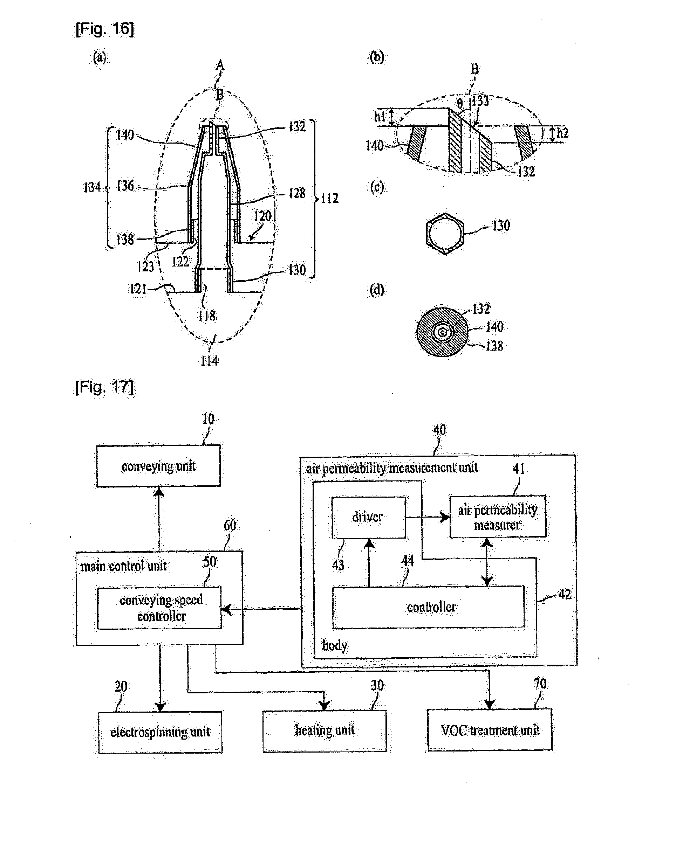

FIG.15 is a sectional view showing a nozzle block in the nanofiber manufacturing apparatus according to the third embodiment of the present invention. FIGS. 16a to 16d show the main parts of the nozzle block in the nanofiber manufacturing apparatus according to the third embodiment of the present invention, wherein FIG.16a is an enlarged view of A in FIG.15, FIG.16b is an enlarged view of B in FIG.16a, FIG.16c is a sectional view of a nozzle base portion, and FIG.16d is a top view of a nozzle 112 and a jacket 134.

Each figure is a schematic view, and the size of each part is not real. Further, four electrospinning units 20 are provided in the first embodiment of the present invention, but for the brevity of the drawing, two electrospinning units 20 are illustrated in the third embodiment of the present invention. In the same manner as the first embodiment of the present invention, however, four electrospinning units 20 may be of course provided.

The whole configuration of the nanofiber manufacturing apparatus 3 according to the third embodiment of the present invention is basically the same as that according to the first embodiment of the present invention, and the same components as those in the nanofiber manufacturing apparatus 1 will be designated to the same reference numerals as each other. The nanofiber manufacturing apparatus 3 according to the third embodiment of the present invention is different just in the configuration of the electrospinning units 20 from the nanofiber manufacturing apparatus 1 according to the first embodiment of the present invention. Herein, the configuration of the electrospinning units 20 will be described.

According to the third embodiment of the present invention, as shown in FIG.14, each electrospinning unit 20 includes a case 100, a nozzle block 110, a collector 150, a power supply 160, an auxiliary belt unit 170, a material tank 200, a second transfer unit 210, a second transfer control unit 220, an intermediate tank 230, a supplier 240, a supply controller 242, a first transfer unit 250, a first transfer control unit 260, and regeneration tanks 270 and 272.

The case 100 is formed of a conductive material. As shown in FIG.15, the nozzle block 110 includes a plurality of upward nozzles 112 having ejection holes conducting upward ejection, a polymer solution supply passage 114, a polymer solution collection passage 120 and a second sensor 142.

As shown in FIG.16a, each upward nozzle 112 includes a nozzle base portion 130 formed on the base portion thereof, a nozzle intermediate portion 128 formed on the intermediate portion thereof, and a nozzle front portion 132 formed on the front end portion thereof. The detailed explanation through the drawing is not given, but each upward nozzle 112 has an upward nozzle side screw portion disposed on the base end side (the nozzle base portion 130) corresponding to a screw portion 118 (as will be discussed later) of the polymer solution supply passage 114. The interior of the upward nozzle 112 is formed of a cave, and the cave communicates with the cave of the polymer solution supply passage 114. The upward nozzle 112 ejects the polymer solution upwardly from the ejection hole. The upward nozzle 112 is made of a conductive material, for example, copper, stainless steel, or aluminum.

As shown in FIG.16b, the nozzle front end portion 132 has a shape of a cylinder cut along the plane crossing slantly to the axis of the cylinder. The angle e between the axis of the cylinder and the plane is 50°.

The nozzle front end portion 132 has a slant surface 133 formed on the front side thereof, and the front end of the slant surface 133 is located higher than that of a jacket 134. A distance h1 between the front end of the slant surface 133 and the front end of the jacket 134 with respect to the axis of the cylinder is 0.5mm.

The base end of the slant surface 133 is located lower than the front end of the jacket 134. A distance h2 between the base end of the slant surface 133 and the front end of the jacket 134 with respect to the axis of the cylinder is 0.5mm.

When the upward nozzle 112 and the jacket 134 are seen from the upper side of the upward nozzle 112 along the axis of the cylinder (See FIG.16d), if it assumed that the area surrounded in the inner circumference of the jacket 134 is S1 and the area surrounded in the outer circumference of the nozzle front end portion 132 is S2, S1-S2 = 3.3 x S2.

The nozzle intermediate portion 128 has a shape of a general cylinder. As shown in FIG.16c, the nozzle base portion 130 has a hexagonal shape.

As shown in FIG.15, the polymer solution supply passage 114 has a generally rectangular body and a cave in the interior thereof. Through the cave, the polymer solution supply passage 114 supplies the polymer solution from the supplier 240 to the plurality of upward nozzles 112. The polymer solution supply passage 114 has a connection portion 116 with the supplier 240 in such a manner as to be connected to the corresponding supplier 240. Further, the polymer solution supply passage 114 includes polymer solution supply passage side screw portions 118. According to the nanofiber manufacturing apparatus 3, the polymer solution supply passage side screw portions 118 are fitted to the upward nozzle side screw portions to allow the polymer solution supply passage 114 and the upward nozzles 112 to be coupled to each other.

The polymer solution collection passage 120 includes an accommodating portion 121, a groove portion 124, a cover portion 123 and a plurality of jackets 134. The polymer solution collection passage 120 collects the polymer solution overflowing from the ejection holes of the upward nozzles 112.

The accommodating portion 121 contains the polymer solution overflowing from the ejection holes of the upward nozzles 112. The accommodating portion 121 is formed on top of the polymer solution supply passage 114. The accommodating portion 121 is somewhat inclined toward the groove portion 124 to send the polymer solution contained thereinto to the groove portion 124.

The groove portion 124 is formed on the side portion of the accommodating portion 121. The groove portion 124 has a connection portion 125 with the first transfer unit on the underside surface thereof in such a manner as to be connected to the first transfer unit.

The cover portion 123 covers the accommodating portion 121 and at the same time has a plurality of nozzle holes communicating with the upward nozzles 112. Further, the cover portion 123 has a cover side screw portion 122 formed on each nozzle hole.

Each jacket 134 covers the outer periphery of each upward nozzle 112 protruding from the nozzle hole. Each jacket 134 includes a jacket base portion 138 formed on the base portion thereof and a jacket front portion 140 formed on the front end portion thereof. The jacket front portion 140 is thinner than the jacket base portion 138. In more detail, the jacket base portion 138 has a shape of a cylinder having a constant thickness, and the jacket front end portion 140 has a shape of a cylinder reduced in thickness at a given rate from a connection portion 136 between the jacket front end portion 140 and the jacket base portion 138 toward the front end thereof (See FIGS.16a and 16d).

The detailed explanation through the drawing is not given, but each jacket 134 has a jacket side screw portion disposed on the base end side corresponding to the cover side screw portion 122.

According to the nanofiber manufacturing apparatus 3, the cover side screw portions 122 are fitted to the jacket side screw portions to allow the cover portion 123 and the jackets 134 to be coupled to each other.

The second sensor 142 measures the liquid surface height of the polymer solution on the polymer solution collection passage 120. In more detail, the second sensor 142 is mounted on the wall surface of the groove portion 124 to measure the liquid surface height of the polymer solution collected on the groove portion 124. For example, the second sensor 142 is formed of an optical fiber sensor.

The material tank 200 stores the polymer solution as the material of the nanofibers. The material tank 200 has an agitator 201 mounted thereinto to prevent the separation or condensation of the polymer solution. The material tank 200 is connected to a pipe 212 of the second transfer unit 210.

The second transfer unit 210 transfers the polymer solution from the material tank 200 or the regeneration tanks 270 and 272 to the intermediate tank 230. The second transfer unit 210 includes the pipe 212 connecting the material tank 200 and the intermediate tank 230 and a pipe 214 connecting the regeneration tanks 270 and 272 and the intermediate tank 230. The end of the pipe 212 is connected to a first storing portion 236 (as will be discussed later) and the end of the pipe 214 is connected to the pipe 212.

The second transfer control unit 220 controls the transferring operation of the second transfer unit 210. The second transfer control unit 220 has valves 222, 224, 226, and 228.

The valve 222 controls the transferring of the polymer solution from the material tank 200, and the valve 224 controls the quantity of polymer solution introduced from the material tank 200 and the regeneration tanks 270 and 272 into the intermediate tank 230. The control of the valve 224 is conducted in accordance with the liquid surface height measured through a first sensor 239 as will be discussed later.

The valve 226 controls the transferring of the polymer solution from the regeneration tank 270, and the valve 228 controls the transferring of the polymer solution from the regeneration tank 272.

The second transfer control unit 220 controls whether the polymer solution is transferred from any of the material tank 200 and the regeneration tanks 270 and 272 to the intermediate tank 230 through the valves 222, 224, 226, and 228. Further, the second transfer control unit 220 controls the transferring operation of the second transfer unit 210 through the valve 224 in accordance with the liquid surface height measured through the first sensor 239. Furthermore, when the second transfer control unit 220 controls the transferring of the polymer solution from the regeneration tanks 270 and 272 to the intermediate tank 230 through the valves 226 and 228, it also controls the selection of the regeneration tank from which the polymer solution is conveyed.

The intermediate tank 230 stores the polymer solution supplied from the material tank 200 or the regeneration tanks 270 and 272. The intermediate tank 230 has the bottom end located above the top ends of the upward nozzles 112. The intermediate tank 230 has a partition 232, a bubble removal filter 234 and the first sensor 239.

The partition 232 covers a portion where the polymer solution is supplied.

The bubble removal filter 234 is mounted on the bottom surface of the partition 232 and removes the bubbles from the polymer solution passed therethrough. For example, the bubble removal filter 234 has a shape of a net having an eye of 0.1mm.

Through the formation of the partition 232 and the bubble removal filter 234, the intermediate tank 230 has a first storing portion 236 where the polymer solution before the bubbles are removed by the bubble removal filter 234 is stored and a second storing portion 238 where the polymer solution after the bubbles are removed by the bubble removal filter 234 is stored.

The second storing portion 238 is connected to the polymer solution supply passage 114 through the supplier 240, and accordingly, the polymer solution stored in the second storing portion 238 is supplied to the polymer solution supply passage 114 of the nozzle block 110.

The first sensor 239 measures the liquid surface height of the polymer solution stored in the second storing portion 238. For example, the first sensor 239 is formed of an optical fiber sensor.

The supplier 240 is formed of one pipe and supplies the polymer solution stored in the second storing portion 238 of the intermediate tank 230 to the polymer solution supply passage 114 of the nozzle block 110. Desirably, one supplier 240 is provided per one nozzle block.

The supply controller 242 is formed of one valve mounted on the supplier 240 to control the supply operation of the supplier 240.

The first transfer unit 250 has a pipe 252 and a pump 254 to transfer the polymer solution from the polymer solution collection passage 120 of the nozzle block 110 to the regeneration tanks 270 and 272.

The pump 254 generates the power through which the polymer solution is transferred to the regeneration tanks 270 and 272 located above the nozzle block 110.

The first transfer control unit 260 controls the transferring operation of the first transfer unit 250. The first transfer control unit 260 includes a controller (not shown) of the valves 262 and 264 and the pump 254.

The valve 262 controls the transferring operation of the polymer solution from the polymer solution collection passage 120 to the regeneration tank 270.

The valve 264 controls the transferring operation of the polymer solution from the polymer solution collection passage 120 to the regeneration tank 272.

The first transfer control unit 260 controls the selection of the regeneration tanks 270 and 272 from which the polymer solution is transferred through the valves 262 and 264

Further, the first transfer control unit 260 controls the transferring operation of the first transfer unit 250, through the controller of the valves 262 and 264 and the pump 254, in accordance with the liquid surface height measured through the second sensor 142.

The regeneration tanks 270 and 272 regenerate the collected polymer solution and store the regenerated polymer solution therein. The regeneration tanks 270 and 272 have respective agitators 271 and 273 mounted thereinto to prevent the separation or condensation of the polymer solution.

Under the above-mentioned configuration, the nanofiber manufacturing apparatus 3 according to the third embodiment of the present invention collects the polymer solution overflowing from the ejection holes of the plurality of upward nozzles and reuses the collected polymer solution as the material of the nanofibers.

A nanofiber manufacturing method using the nanofiber manufacturing apparatus 3 according to the third embodiment of the present invention includes the steps of conducting electrospinning of the nanofibers by the overflowing ejection of the polymer solution from the ejection holes of the plurality of upward nozzles 112, and at the same time collects the polymer solution overflowing from the ejection holes of the plurality of upward nozzles 112, so that the collected polymer solution is reused as the material of the nanofibers.

Further, the nanofiber manufacturing apparatus 3 according to the third embodiment of the present invention collects the overflowing polymer solution to the polymer solution collection passage 120. When the polymer solution is appropriately collected to the groove portion 124 of the polymer solution collection passage 120, it is transferred to the regeneration tank 270 by means of the first transfer unit 250.

After a given quantity of polymer solution is collected to the regeneration tank 270, the storing position of the polymer solution is changed to the regeneration tank 272 by means of the first transfer unit 250 under the control of the first transfer control unit 260. Accordingly, the overflowing polymer solution is collected to the regeneration tank 272, so that while the post-processes of the regeneration tank 270 are being conducted, the overflowing polymer solution does not enter to the regeneration tank 270.

Next, the contents of the solvent and the additives in the collected polymer solution are measured. The measurement is conducted by obtaining a portion of the polymer solution in the regeneration tank 270 as a sample and analyzing the sample. The analysis of the polymer solution is carried out through the methods well known in this field.

Next, through the measured results, the solvent, additives and other components are added to the polymer solution, if necessary, and accordingly, the collected polymer solution is regenerated. After that, the polymer solution in the regeneration tank 270 is transferred to the intermediate tank 230 through the pipe 212 of the second transfer unit 210. Instead of the polymer material in the material tank 200, the polymer solution in the regeneration tank 270 is used for the electrospinning operation, and alternatively, it is used for the electrospinning operation, together with the polymer material in the material tank 200, so that it can be reused as the material of the nanofibers.

After a given quantity of polymer solution is collected to the regeneration tank 272, further, the polymer solution in the regeneration tank 272 is reused as the material of the nanofibers, through the same manner as in the regeneration tank 270.

Further, the nanofiber manufacturing apparatus 3 according to the third embodiment of the present invention conducts the electrospinning operation through the ejection of the polymer solution from the ejection holes of the plurality of upward nozzles, thereby preventing the droplets occurring in the conventional nanofiber manufacturing apparatus having downward ejection nozzles and further manufacturing a high quality of nanofibers.

Further, the nanofiber manufacturing apparatus 3 according to the third embodiment of the present invention conducts the electrospinning operation through the ejection of the polymer solution overflowing from the ejection holes of the plurality of upward nozzles, thereby allowing a sufficient quantity of polymer solution to be supplied to the nozzles and further manufacturing a uniform quality of nanofibers.

Further, the nanofiber manufacturing apparatus 3 according to the third embodiment of the present invention collects the polymer solution overflowing from the ejection holes of the plurality of upward nozzles and reuses the collected polymer solution as the material of the nanofibers, thereby reducing the usage cost of the material and providing low manufacturing costs and high resource saving effects.

According to the third embodiment of the present invention, the front end portion of each nozzle has a shape of a cylinder cut along the plane crossing slantly to the axis of the cylinder, so that the polymer solution flowing from the ejection holes of the upward nozzles 112 rapidly drops, without staying on the front end portion of each nozzle. This reduces the quantity of solvent volatilized from the polymer solution during the electrospinning process and at the same time extremely reduces the quantity of solidified polymers produced around the ejection holes of the upward nozzles 112. According to the third embodiment of the present invention, therefore, even when the nanofiber manufacturing apparatus 3 conducts the electrospinning operation through the ejection of the polymer solution overflowing from the ejection holes of the plurality of upward nozzles, the quantity of solidified polymers generated can be substantially decreased, thereby preventing the solidified polymers from being attached to the nanofibers and thus ensuring a high quality of nanofibers.

According to the third embodiment of the present invention, further, the nanofiber manufacturing apparatus 3 includes the material tank 200, the regeneration tanks 270 and 272, the intermediate tank 230, the first transfer unit 250, the first transfer control unit 260, the second transfer unit 210 and the second transfer control unit 220, and thus, after the collected polymer solution is transferred to the regeneration tanks 270 and 272, the composition of the collected polymer solution is measured and through the measured result, the solvent and other desired components are added to the polymer solution, so that the collected polymer solution can be regenerated by providing the same composition as its original polymer solution or almost similar composition thereto. According to the third embodiment of the present invention, further, the nanofiber manufacturing apparatus 3 can collect and reuse the overflowing polymer solution as the material of nanofibers and constantly maintain the spinning conditions (in this case, the composition of the polymer solution) in the electrospinning process for long hours, thereby producing the uniform quality of nanofibers in large quantities.

### [Example]

Through the nanofiber manufacturing apparatus 3 according to the third embodiment of the present invention, the electrospinning of the nanofibers was conducted through the overflowing ejection of the polymer solution from the ejection holes of the plurality of upward nozzles 112, and at the same time the overflowing polymer solution from the ejection holes of the plurality of upward nozzles 112 was collected and reused as the material of the nanofibers. In more detail, after the collected polymer solution was transferred to the regeneration tanks 270 and 272, the composition of the collected polymer solution was measured and through the measured result, the solvent and other desired components were added to the polymer solution, so that the collected polymer solution was regenerated.

Table 3 shows the composition of the polymer solution as the material of the nanofibers, and Table 4 shows the composition of the collected polymer solution. Table 5 shows the composition of the regenerated polymer solution. In Table 3, 4 and 5, relative weight means the relative weight of each material with respect to 100% polyurethane.

**[Table 3]**

| Materials | Relative weight |
|---|---|
| Polyurethane(polymer) | 100.0 |
| Dimethy form amide (solvent) | 240.0 |
| Methyl ethyl ketone (solvent) | 160.0 |

**[Table 4]**

| Materials | Relative weight |
|---|---|
| Polyurethane (polymer) | 100.0 |
| Dimethyl form amide (solvent) | 199.2 |
| Methyl ethyl ketone (solvent) | 85.4 |

**[Table 5]**

| Materials | Relative weight |
|---|---|
| Polyurethane(polymer) | 100.0 |
| Dimeethyl form amide (solvent) | 240.0 |
| Methyl ethyl ketone (solvent) | 160.0 |

As apparent from Tables 3 to 5, the example showed that the collected polymer solution can be regenerated as the polymer solution having the same composition as its original polymer solution or almost similar composition thereto.

In the example, 40.8g of dimethyl form amide and 74.6g of methyl ethyl ketone per 100g of polyurethane were added to the collected polymer solution, thereby regenerating the polymer solution.

All kinds of values (for example, the angle e between the axis of the cylinder and the plane, the distance h1 between the front end of the slant surface 133 and the front end of the jacket 134 with respect to the axis of the cylinder, and the distance h2 between the base end of the slant surface 133 and the front end of the jacket 134 with respect to the axis of the cylinder) mentioned in the nanofiber manufacturing apparatus 3 according to the third embodiment of the present invention are not limited to the values mentioned therein, and they may be appropriately set to optimized values. For example, the angle e between the axis of the cylinder and the plane is not limited to 50°, and it may be in the range between 15° and 60°.

### [Fourth embodiment]

FIG.17 is a block diagram showing a nanofiber manufacturing apparatus according to a fourth embodiment of the present invention. As shown in FIG.17, a nanofiber manufacturing apparatus according to a fourth embodiment of the present invention includes a conveying speed controller 50 for controlling the conveying speed V on the basis of the air permeability P measured through an air permeability measurement unit 40. The conveying speed controlling is one of the functions of a main control unit 60 (See FIG.1b), and the conveying speed controller 50 is mounted on the main control unit 60.

The whole configuration of the nanofiber manufacturing apparatus according to the fourth embodiment of the present invention is basically the same as that according to the first embodiment of the present invention (See FIGS.1 and 1b), and therefore, it is not separately illustrated in the drawing.

As shown in FIG.17, the air permeability measurement unit 40 includes an air permeability measurer 41 for measuring the air permeability P of the long sheet W, a driver 43 for reciprocating the air permeability measurer 41 along the width direction of the long sheet W in a given period T, and a controller 44 for controlling the operations of the driver 43 and the air permeability measurer 41 and for receiving and processing the measured result from the air permeability measurer 41. The driver 43 and the controller 44 are mounted on a body 42. A well known air permeability measurer is used as the air permeability measurement unit 40.

The air permeability measurement unit 40 transmits the value itself of the measured air permeability P to the conveying speed controller 50 and also transmits the value of the mean air permeability <P> obtained by averaging the measured air permeability P with the given period T or the time corresponding to n times (wherein, n is natural number) of the given period T to the conveying speed controller 50.

The conveying speed controller 50 controls the conveying speed V of the long sheet W being conveyed by means of the conveying unit 10 in accordance with the air permeability P or the mean air permeability <P> measured through the air permeability measurement unit 40. For example, if the spinning condition is changed thus to increase the air permeability P in the electrospinning process for long hours, the conveying speed V becomes slow to increase the quantity of nanofibers accumulated per unit area, thereby allowing the increased air permeability P to be reduced.

On the other hand, if the spinning condition is changed thus to decrease the air permeability P in the electrospinning process for long hours, the conveying speed V becomes fast to reduce the quantity of nanofibers accumulated per unit area, thereby allowing the decreased air permeability P to be increased. The conveying speed V is controlled through the control of the rotating speeds of the driving rollers 14, 15, 16 and 17.

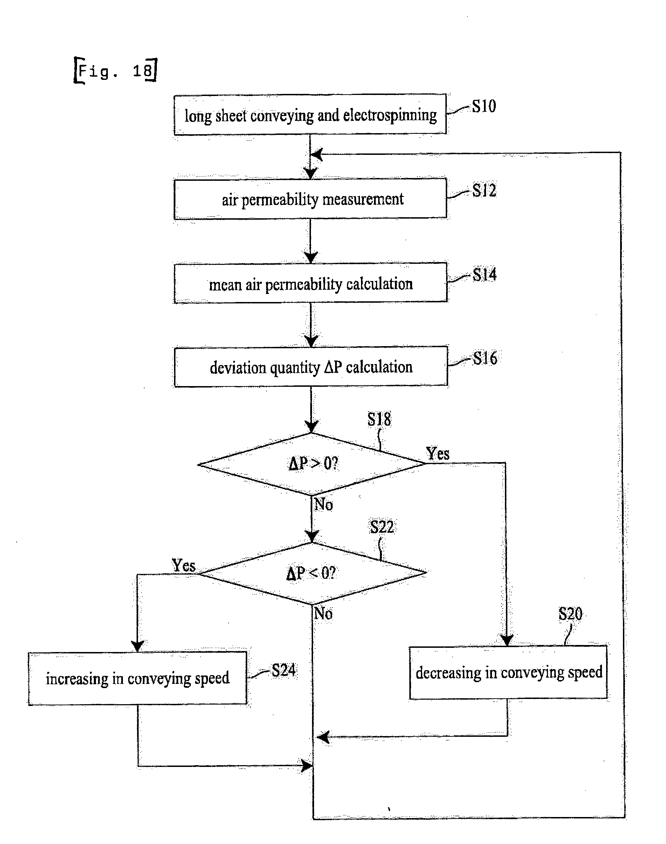

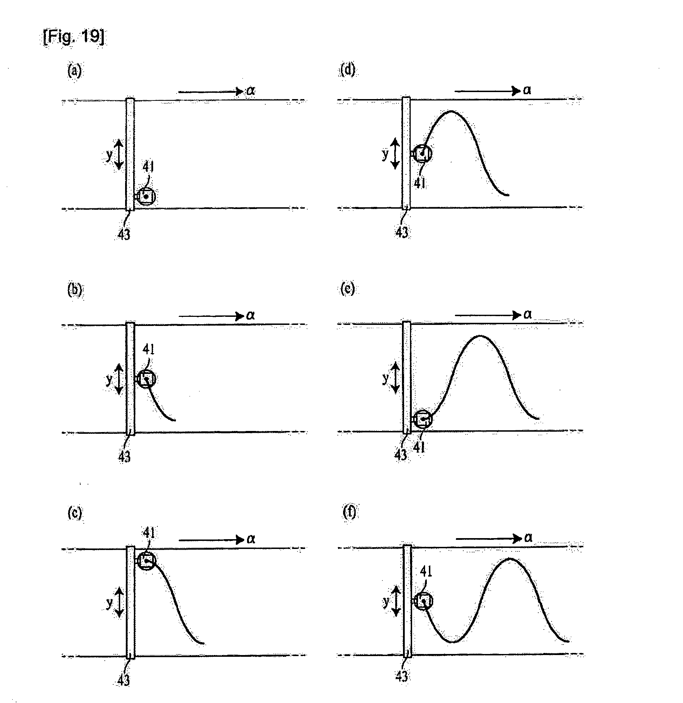

FIG.18 is a flow chart showing a nanofiber manufacturing method according to the fourth embodiment of the present invention. FIGS. 19a to 19f show the procedure of the movements of the air permeability measurement unit. In FIGS. 19a to 19f, the curves indicated by sine curves are the tracks along which the air permeability P is measured on the long sheet W through the air permeability measurer 41.

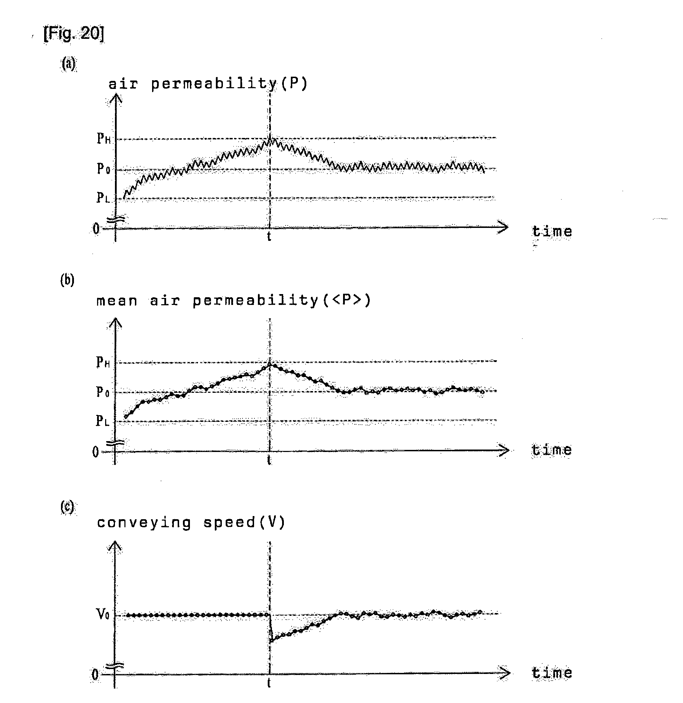

FIGS.20a to 20c are graphs showing the time variations of the air permeability, mean air permeability, and conveying speed. FIG.20a is the graph the time variation of the air permeability P, FIG.20b is the graph the time variation of the mean air permeability <P>, and FIG.20c is the graph the time variation of the conveying speed V. In FIGS.20a and 20b, a symbol P0 indicates target air permeability, P_{H} indicates the upper limit of air permeability allowable, and P_{L} indicates the lower limit of air permeability allowable. In FIG.20c, a symbol Vₒ indicates an initial value of conveying speed V.

According to the fourth embodiment of the present invention, as shown in FIG.18, a nanofiber manufacturing method includes the steps of long sheet conveying and electrospinning, air permeability measurement, mean air permeability calculation, deviation quantity ΔP calculation, and conveying speed controlling.

### 1. Long sheet conveying and electrospinning (S10)

The long sheet W is set to the conveying unit 10, and the long sheet W is conveyed from the injection roller 11 to the winding roller 12 at the given conveying speed V. Next, the nanofibers are sequentially accumulated on the long sheet W through the plurality of electrospinning units 20. After that, the long sheet W on which the nanofibers are accumulated is heated by means of the heating unit 30. Accordingly, the long sheet W on which the nanofibers are accumulated is manufactured as the nanofiber non-woven fabric.

At this time, the air permeability P of the long sheet W on which the nanofibers are accumulated through the plurality of electrospinning units is measured, and at the same time, the conveying speed V is controlled in accordance with the air permeability P measured through the air permeability measurement unit 40. According to the fourth embodiment of the present invention, as shown in FIGS.20a to 20c, the control of the conveying speed is not carried out for the period of time before time t is passed, and the control of the conveying speed is carried out for the period of time after time t has passed. In the same manner as above, first and second modification examples as will be discussed later are carried out.

### 2. Air permeability measurement (S12)

First, as shown in FIGS.19a to 19f, the air permeability measurer 41 is reciprocated along the width direction y of the long sheet W in the given period T (for example, one second), thereby measuring the air permeability P of the long sheet W. The measurement of the air permeability through the air permeability measurer 41 is conducted every 10ms. As a result, the graph as shown in FIG.20a is obtained.

### 3. Mean air permeability calculation (S14)

Next, the air permeability P measured through the air permeability measurer 41 is averaged with the given period T (for example, one second), thereby calculating the mean air permeability <P>. As a result, the graph as shown in FIG.20b is obtained.

### 4. Deviation quantity ΔP calculation (S16)

After that, the deviation quantity ΔP between the mean air permeability <P> and the given target air permeability Pₒ is calculated.

### 5. Conveying speed controlling (S18 to S24)

Next, the conveying speed V is controlled in accordance with the deviation quantity ΔP.

For example, if the spinning condition is changed thus to increase the air permeability P in the electrospinning process for long hours (if the deviation quantity ΔP is positive), the conveying speed V becomes slow to increase the quantity of nanofibers accumulated per unit area, thereby allowing the increased air permeability P to be reduced. On the other hand, if the spinning condition is changed thus to decrease the air permeability P in the electrospinning process for long hours (if the deviation quantity ΔP is negative), the conveying speed V becomes fast to reduce the quantity of nanofibers accumulated per unit area, thereby allowing the decreased air permeability P to be increased (See FIG.20c). After the time t has passed, accordingly, the air permeability P is converged slowly to the given target air permeability Pₒ.

According to the fourth embodiment of the present invention, the nanofiber manufacturing apparatus controls the conveying speed V in accordance with the air permeability measured through the air permeability measurement unit 40. Even if the spinning condition is changed in the electrospinning process for long hours to cause the air permeability to be varied, the conveying speed V is appropriately controlled to allow the varying quantity of the air permeability to remain in a given range, thereby producing the nanofiber non-woven fabric having the uniform air permeability in large quantities. According to the fourth embodiment of the present invention, further, the air permeability of the nanofiber non-woven fabric manufactured by the nanofiber manufacturing apparatus is set to the range between 0.15cm³/cm²/s and 200cm³/cm²/s.

According to the fourth embodiment of the present invention, the nanofiber manufacturing apparatus controls the conveying speed V in accordance with the deviation quantity ΔP between the mean air permeability <P> and the given target air permeability Pₒ, so that if the deviation quantity ΔP is large, the control quantity (the quantity varying from the initial value Vₒ) of the conveying speed V becomes increased, and if the deviation quantity ΔP is small, the control quantity (the quantity varying from the initial value Vₒ) of the conveying speed V becomes decreased, thereby appropriately controlling the conveying speed V in accordance with the variations of the air permeability.

According to the fourth embodiment of the present invention, the nanofiber manufacturing apparatus controls the conveying speed V in accordance with the mean air permeability <P> through the conveying speed controller 50, so that even if the distribution of the air permeability P along the width direction y of the long sheet W is varied, the control of the conveying speed V can be conducted in accordance with the mean air permeability <P>, thereby appropriately controlling the conveying speed V.

According to the fourth embodiment of the present invention, the nanofiber manufacturing apparatus accumulates the nanofibers on the long sheet W being conveyed at the given conveying speed V, measures the air permeability P of the long sheet W on which the nanofibers are accumulated, and controls the conveying speed V of the long sheet W in accordance with the air permeability P of the long sheet W, so that even if the spinning condition is changed in the electrospinning process for long hours to cause the air permeability to be varied, the conveying speed V is appropriately controlled to allow the varying quantity of the air permeability to remain in the given range, thereby producing the nanofiber non-woven fabric having the uniform air permeability in large quantities.

According to the fourth embodiment of the present invention, the nanofiber manufacturing apparatus accumulates the nanofibers having the uniform air permeability on the long sheet W having the uniform air permeability, thereby producing the nanofiber non-woven fabric having the uniform air permeability in large quantities, and further accumulates the nanofibers having relatively different air permeability on the long sheet W having relatively different air permeability, thereby producing the nanofiber non-woven fabric having the uniform air permeability in large quantities.

### [Fifth embodiment]

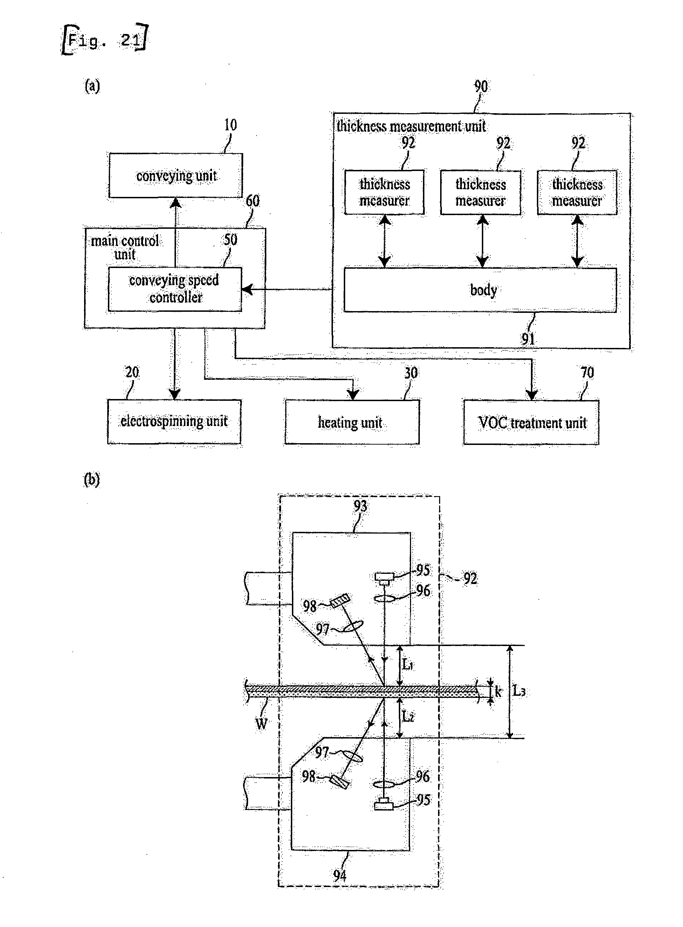

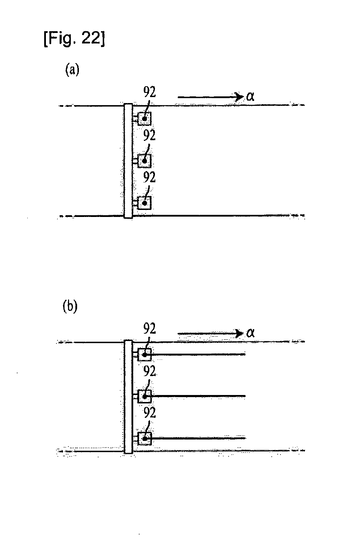

FIGS.21a and 21b show a nanofiber manufacturing apparatus according to a fifth embodiment of the present invention, wherein FIG.21a is a block diagram showing the relationship among a thickness measurement unit, a conveying speed control unit, and a conveying unit, and FIG.21b shows a configuration of the thickness measurement unit. FIGS.22a and 22b show the movements of the thickness measurement unit.

The nanofiber manufacturing apparatus according to a fifth embodiment of the present invention is the same as that according to the fourth embodiment of the present invention, except that the air permeability measurement unit is changed to the thickness measurement unit.

According to the fifth embodiment of the present invention, as shown in FIGS.21a and 21b, the nanofiber manufacturing apparatus includes a thickness measurement unit 90 for measuring the thickness k of the long sheet W on which the nanofibers are accumulated through the electrospinning units 20 and a conveying speed controller 50 for controlling the conveying speed V of the long sheet W in accordance with the thickness k measured through the thickness measurement unit 90.

As shown in FIG.21a, the thickness measurement unit 90 includes three thickness measurers 92 and a body 91 for controlling the operations of the three thickness measurers 92 and calculating the thickness of the long sheet W in accordance with the thickness measured through the thickness measurers 92. The thickness measurement unit 90 transmits the information on the thickness measured through the thickness measurers 92 to the conveying speed controller 50. As a result, the conveying speed controller 50 controls the conveying speed V of the long sheet W being conveyed through the conveying unit 10 in accordance with the received information on the thickness.

As shown in FIG.21b, each thickness measurers 92 includes a pair of laser ranging parts 93 and 94 arranged to face each other, interposing the long sheet W therebetween, and the pair of laser ranging parts 93 and 94 measures the distance up to the long sheet W through triangulation techniques. Each of the laser ranging parts 93 and 94 includes a laser diode 95, a light transmitting lens 96 for transmitting the laser light emitted from the laser diode 95, a light receiving lens 97 for receiving the laser light transmitted from the light transmitting lens 95 and reflected by the surface (one surface or the other surface) of the long sheet W, and a light receiving circuit 98 formed of a CCD (Charge-Coupled Device) element for receiving the laser light received by the light receiving lens 97.

At this time, since the position of the beam spot formed on the light receiving circuit 98 is varied by distances L₁ and L₂ up to the surface (one surface or the other surface) of the long sheet W, the varying quantity is read to measure the distance of the L₁ and L₂. If it is assumed that the distance between the pair of laser ranging parts 93 and 94 is L₃, the thickness k of the long sheet W is calculated by a relation equation k=L₃-(L₁+L₂). General laser ranging devices can be used as the pair of laser ranging parts 93 and 94.

As shown in FIGS.22a and 22b, the thickness measurement unit 90 includes the three thickness measurers 92 arranged at different positions (center, left end and right end) from each other in the width direction y of the long sheet W.

The thickness measurement unit 90 transmits the value itself of the measured thickness k to the conveying speed controller 50 and also transmits the value of the mean thickness <k> obtained by averaging the measured thicknesses k measured from the three thickness measurers 92 to the conveying speed controller 50.

The conveying speed controller 50 controls the conveying speed V of the long sheet W being conveyed by means of the conveying unit 10 in accordance with the thickness k or the mean thickness <k> measured through the thickness measurement unit 90. For example, if the spinning condition is changed thus to decrease the thickness k in the electrospinning process for long hours, the conveying speed V becomes slow to increase the quantity of nanofibers accumulated per unit area, thereby allowing the decreased thickness k to be increased. On the other hand, if the spinning condition is changed thus to increase the thickness k in the electrospinning process for long hours, the conveying speed V becomes fast to reduce the quantity of nanofibers accumulated per unit area, thereby allowing the increased thickness k to be decreased. The conveying speed V is controlled through the control of the rotating speeds of the driving rollers 14, 15, 16 and 17.

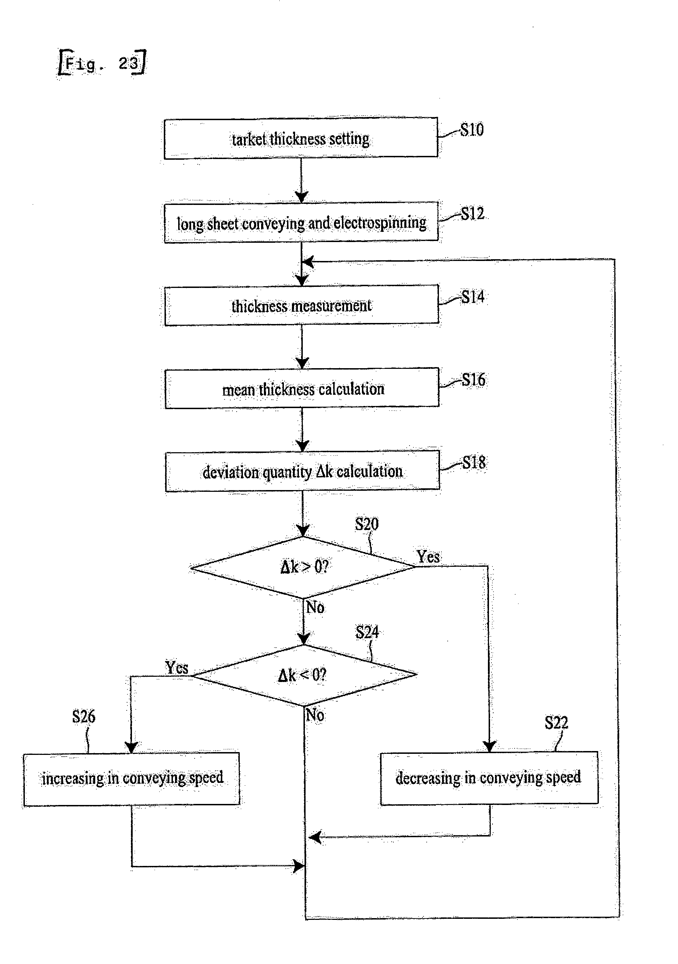

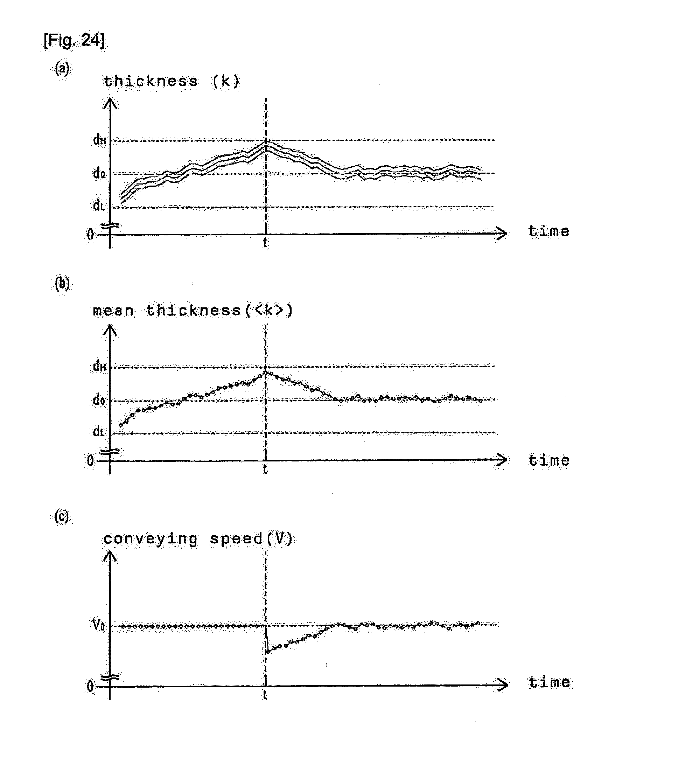

FIG.23 is a flow chart showing a nanofiber manufacturing method according to the fifth embodiment of the present invention, and FIGS.24a to 24c are graphs showing the time variations of the thickness, mean thickness, and conveying speed. FIG.24a is the graph the time variation of the thickness k, FIG.24b is the graph the time variation of the mean thickness <k>, and FIG.24c is the graph the time variation of the conveying speed V. In FIGS.24a and 24b, a symbol d0 indicates target thickness, d_{H} indicates the upper limit of thickness allowable, and d_{L} indicates the lower limit of thickness allowable. In FIG.24c, a symbol Vₒ indicates an initial value of conveying speed V.

According to the fifth embodiment of the present invention, as shown in FIG.23, a nanofiber manufacturing method includes the steps of target thickness setting, long sheet conveying and electrospinning, thickness measurement, mean thickness calculation, deviation quantity Δk calculation, and conveying speed controlling.

### 1. Target thickness setting (S10)

The thickness of the nanofiber non-woven fabric to be manufactured is set as the target thickness.

### 2. Long sheet conveying and electrospinning (S12)

The long sheet W is set to the conveying unit 10, and the long sheet W is conveyed from the injection roller 11 to the winding roller 12 at the given conveying speed V. Next, the nanofibers are sequentially accumulated on the long sheet W through the plurality of electrospinning units 20. After that, the long sheet W on which the nanofibers are accumulated is heated by means of the heating unit 30. Accordingly, the long sheet W on which the nanofibers are accumulated is manufactured as the nanofiber non-woven fabric.

At this time, the thickness k of the long sheet W on which the nanofibers are accumulated through the plurality of electrospinning units is measured, and at the same time, the conveying speed V is controlled in accordance with the thickness k measured through the thickness measurement unit 90. According to the fifth embodiment of the present invention, as shown in FIGS.24a to 24c, the control of the conveying speed is not carried out for the period of time before time t is passed, and the control of the conveying speed is carried out for the period of time after time t has passed. In the same manner as above, first and second modification examples as will be discussed later are carried out.

### 3. Thickness measurement (S14)

First, as shown in FIGS.22a and 22b, the thickness k of the long sheet W is measured through the three thickness measurers 92. The thickness measurement is conducted every 10ms. As a result, the graph as shown in FIG.24a is obtained.

### 4. Mean thickness calculation (S16)

Next, the measured thicknesses k through the thickness measurers 92 are averaged to calculate the mean thickness <k>. As a result, the graph as shown in FIG.24b is obtained.

### 6. Deviation quantity Δk calculation (S18)

After that, the deviation quantity Δk between the mean thickness <k> and given target thickness Kₒ is calculated.

### 7. Conveying speed controlling (S20 to S26)

Next, the conveying speed V is controlled in accordance with the deviation quantity Δk.

For example, if the spinning condition is changed thus to decrease the thickness k in the electrospinning process for long hours (if the deviation quantity Δk is negative), the conveying speed V becomes slow to increase the quantity of nanofibers accumulated per unit area, thereby allowing the decreased thickness k to be increased. On the other hand, if the spinning condition is changed thus to increase the thickness k in the electrospinning process for long hours (if the deviation quantity Δk is positive), the conveying speed V becomes fast to reduce the quantity of nanofibers accumulated per unit area, thereby allowing the increased thickness k to be decreased (See FIG.24c). After the time t has passed, accordingly, the thickness k is converged slowly to the given target thickness Kₒ.

According to the fifth embodiment of the present invention, the nanofiber manufacturing apparatus controls the conveying speed V in accordance with the thickness k measured through the thickness measurement unit 90. Even if the spinning condition is changed in the electrospinning process for long hours to cause the thickness to be varied, the conveying speed V is appropriately controlled to allow the varying quantity of the thickness to remain in a given range, thereby producing the nanofiber non-woven fabric having the uniform thickness in large quantities. According to the fifth embodiment of the present invention, further, the thickness k of the nanofiber non-woven fabric manufactured by the nanofiber manufacturing apparatus is set to the range between 1µm and 100µm.

According to the fifth embodiment of the present invention, the nanofiber manufacturing apparatus controls the conveying speed V in accordance with the deviation quantity Δk between the mean thickness <k> and the given target thickness Kₒ, so that if the deviation quantity Δk is large, the control quantity (the quantity varying from the initial value Vₒ) of the conveying speed V becomes increased, and if the deviation quantity Δk is small, the control quantity (the quantity varying from the initial value Vₒ) of the conveying speed V becomes decreased, thereby appropriately controlling the conveying speed V in accordance with the variations of the thickness.

According to the fifth embodiment of the present invention, the nanofiber manufacturing apparatus includes the three thickness measurers located at the different positions in the with direction y of the long sheet W, thereby allowing the thickness k of the long sheet W to be measured over the wide range of the long sheet W in the width direction y thereof and appropriately controlling the conveying speed V in accordance with the thickness.

According to the fifth embodiment of the present invention, the nanofiber manufacturing apparatus controls the conveying speed V in accordance with the mean thickness <k> through the conveying speed controller 50, so that even if the distribution of the thickness k along the width direction y of the long sheet W is varied, the control of the conveying speed V can be conducted in accordance with the mean thickness <k>, thereby appropriately controlling the conveying speed V.

According to the fifth embodiment of the present invention, the nanofiber manufacturing apparatus accumulates the nanofibers on the long sheet W being conveyed at the given conveying speed V, measures the thickness k of the long sheet W on which the nanofibers are accumulated, and controls the conveying speed V of the long sheet W in accordance with the thickness k of the long sheet W, so that even if the spinning condition is changed in the electrospinning process for long hours to cause the thickness to be varied, the conveying speed V is appropriately controlled to allow the varying quantity of the thickness to remain in the given range, thereby producing the nanofiber non-woven fabric having the uniform thickness in large quantities.

According to the fifth embodiment of the present invention, the thickness measurement unit 90 in the nanofiber manufacturing apparatus is not limited as explained herein, and for example, it may measure the thickness of the long sheet W through the pictures obtained by camera.

According to the fifth embodiment of the present invention, the nanofiber manufacturing apparatus accumulates the nanofibers having the uniform thickness on the long sheet W having the uniform thickness, thereby producing the nanofiber non-woven fabric having the uniform thickness in large quantities, and further accumulates the nanofibers having relatively different thicknesses on the long sheet W having relatively different thicknesses, thereby producing the nanofiber non-woven fabric having the uniform thickness in large quantities.

### [Sixth embodiment]

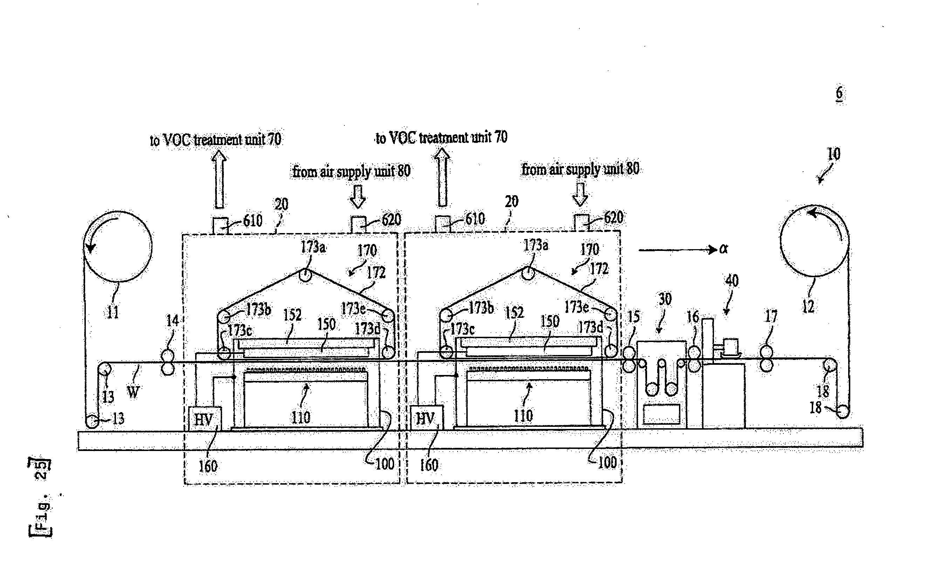

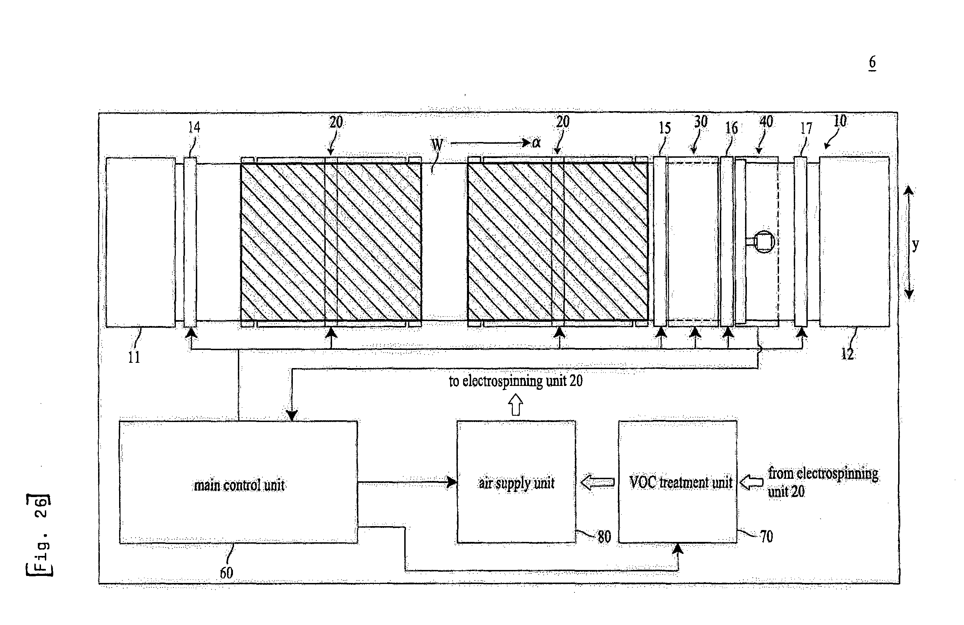

FIG.25 is a front view showing a nanofiber manufacturing apparatus according to a sixth embodiment of the present invention. FIG.26 is a plan view showing the nanofiber manufacturing apparatus according to the sixth embodiment of the present invention. In FIGS.25 and 26, the polymer solution supply unit and the polymer solution collection unit are not separately shown in the drawing.

According to the sixth embodiment of the present invention, further, two electrospinning units 20 are provided for the brevity of the drawing. Of course, a plurality of electrospinning units (for example, four devices like the first and second embodiments of the present invention) may be provided in the sixth embodiment of the present invention. In FIGS.25 and 26, further, the same components as those in the nanofiber manufacturing apparatus 1 will be designated to the same reference numerals as each other.

According to the sixth embodiment of the present invention, a nanofiber manufacturing apparatus includes an air supply unit 80 (See FIG.26) for supplying environmentally conditioned air. Further, as shown in FIG.26, each electrospinning unit 20 has a volatile organic compound exhaust port 610 for exhausting the volatile organic compounds generated when the nanofibers are accumulated and an environmentally conditioned air introduction port 620 for introducing the environmentally conditioned air from the air supply unit 80.

The end of the volatile organic compound exhaust port 610 is located at a position where the volatile organic compounds are exhaustible on the electrospinning unit 20. For example, the end of the volatile organic compound exhaust port 610 may be located around the nozzle block 110 of the electrospinning unit 20 or on the ceiling of the room where the electrospinning unit 20 is installed.

A VOC treatment unit 70 burns and removes the volatile organic compounds generated when the nanofibers are accumulated on the long sheet W and includes a hot air exhaust portion (not shown) for blowing the hot air produced by the combustion heat generated during the combustion of the volatile organic compounds wind to the air supply unit 80. The hot air exhausted from the hot air exhaust portion is supplied to the air supply unit 80, and the temperature of the hot air exhausted from the VOC treatment unit 70 is in the range between 40°C and 140°C.

The air supply unit 80 includes a dehumidifier 810 having functions of dehumidifying air through a dehumidifying agent like silica gel to produce the dehumidified air and drying and reusing the wet dehumidifying agent.

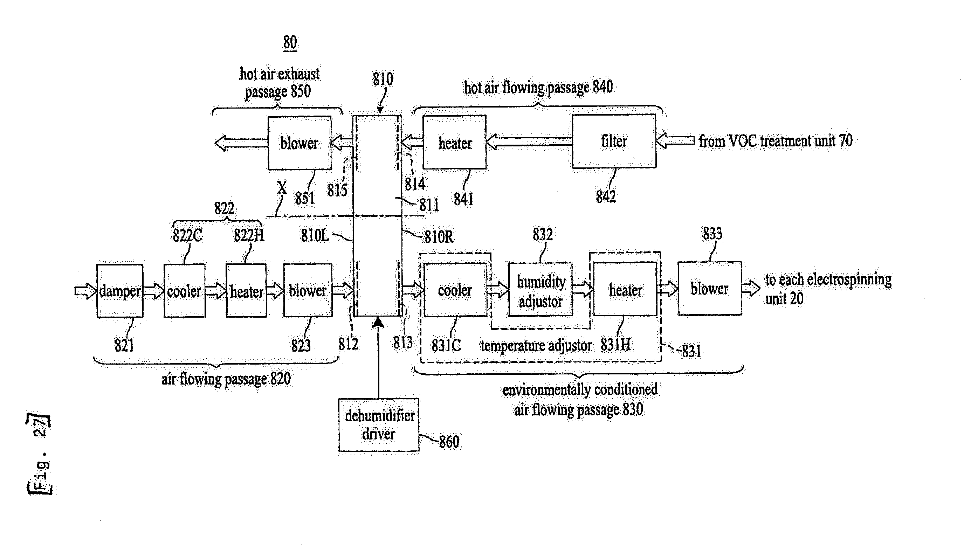

FIG.27 shows an air supply unit in the nanofiber manufacturing apparatus according to the sixth embodiment of the present invention. As shown in FIG.27, the air supply unit 80 includes the dehumidifier 810, an air flowing passage 820 through which the air (to be used for dehumidification) to be sent to the dehumidifier 810 flows, an environmentally conditioned air flowing passage 830 through which the environmentally conditioned air whose humidity and temperature are appropriately adjusted flows, a hot air flowing passage 840 through which the hot air produced by the combustion heat generated upon the combustion of the VOCs flows, a hot air exhaust passage 850 through which the hot air passed through the dehumidifier 810 is exhausted, and a dehumidifier driver 860 for driving the dehumidifier 810. Now, a detailed explanation on the dehumidifier 810 will be given.

The air flowing passage 820 is adapted to send the air used for the dehumidification to the dehumidifier 810, and along the air flowing passage 820 are mounted a damper 821 as an air introduction port, a temperature adjustor 822 for adjusting a temperature of air before the air introduction into the dehumidifier 810 to allow the temperature of the air to be in a given range, and a blower 823 for sending the air whose temperature is adjusted to the dehumidifier 810.

The temperature adjustor 822 has a cooler 822c and a heater 833H, and through the appropriate selection of the cooler 822C and the heater 833H, the temperature of the air to be sent to the dehumidifier 810 is appropriately adjusted. Since the air flowing along the air flowing passage 820 is external air, the temperature of the external air may be varied in accordance with a variety of circumstances like seasons. Accordingly, if the temperature of the air to be sent to the dehumidifier 810 is too high, the cooler 822C is operated, and contrarily, if the temperature of the air to be sent to the dehumidifier 810 is too low, the heater 822H is operated, thereby appropriately adjusting the temperature of the air to be sent to the dehumidifier 810.

After the adjustment of the temperature of the air to be sent to the dehumidifier 810, the temperature of the air to be sent to the dehumidifier 810 desirably has to become a temperature close to an appropriate environmental temperature to the electrospinning unit 20. For example, if an appropriate environmental temperature to the electrospinning unit 20 is 25°C, the temperature of the air to be sent to the dehumidifier 810 is adjusted to a temperature close to 25°C.

Through the appropriate temperature adjustment of the air to be sent to the dehumidifier 810, when the temperature of the dehumidified air produced by means of the dehumidifier 810 is adjusted through a temperature adjustor 831 (as will be discussed later) mounted on the environmentally conditioned air flowing passage 830, there is no need to conduct the temperature adjustment over a large range, so that when the humidity of the dehumidified air is adjusted through a humidity adjustor 832 (as will be discussed later) mounted on the environmentally conditioned air flowing passage 830, the humidity can be high precisely adjusted.

The environmentally conditioned air flowing passage 830 is adapted to send the environmentally conditioned air to the electrospinning units 20, and along the environmentally conditioned air flowing passage 830 are mounted the temperature adjustor 831 for allowing the temperature of the dehumidified air produced by means of the dehumidifier 810 to be adjusted to the appropriate temperature in the electrospinning units 20, the humidity adjustor 832 for allowing the humidity of the dehumidified air to be adjusted to the appropriate humidity in the electrospinning units 20, and a blower 833 for sending the environmentally conditioned air to the electrospinning units 20.

The temperature adjustor 831 has a cooler 831c and a heater 831H, and through the appropriate selection of the cooler 831C and the heater 831H, the temperature of the air to be sent to the electrospinning units 20 is appropriately adjusted.

The hot air flowing passage 840 is adapted to send the hot air exhausted from the VOC treatment unit 60 to the dehumidifier 810, and through the hot air flowing passage 840 is mounted a hot air temperature adjusting heater 841 for adjusting the temperature of the hot air. The heater 841 heats the hot air to an appropriate temperature if the temperature of the hot air exhausted from the VOC treatment unit 60 does not reach the temperature required to regenerate the dehumidifying agent. Further, through the hot air flowing passage 840 is mounted a filter 842 for removing the impurities of the hot air exhausted from the VOC treatment unit 60 if necessary.

The hot air exhaust passage 850 is adapted to exhaust the hot air passed through the dehumidifier 810, and through the hot air exhaust passage 850 is mounted a blower 851 for exhausting the hot air passed through the dehumidifier 810 to the outside.

According to the air supply unit 80, as shown in FIG.27, the flows of air, through the air flowing passage 820, the environmentally conditioned air flowing passage 830, the hot air flowing passage 840 and the hot air exhaust passage 850, are indicated by arrows, but in practical use, air flowing ducts are mounted thereon, through which the air flows.

By the way, the dehumidifier 810 includes a dehumidifying agent containing portion 811 in which the dehumidifying agent is contained, an air introduction portion 812, a dehumidified air sending portion 813 from which the dehumidified air is sent, a hot air introduction portion 814 for introducing the hot air exhausted from the VOC treatment unit 70, and a hot air exhaust portion 815 for exhausting the hot air to the outside. According to the sixth embodiment of the present invention, the dehumidifying agent containing portion 811 is formed of one space portion in which the dehumidifying agent is filled.

Under the above configuration, the dehumidifier 810 produces the dehumidified air by using the dehumidifying agent and at the same time dries and regenerates the wet dehumidifying agent through the hot air introduced from the hot air introduction portion 814, thereby repeatedly conducting the operation of producing the dehumidified air by using the regenerated dehumidifying agent.

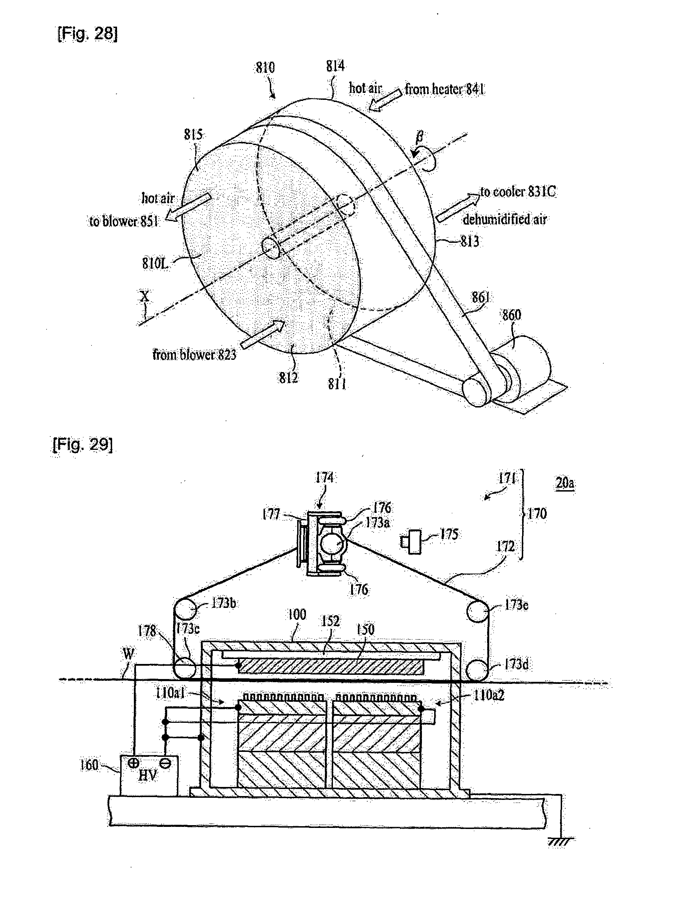

FIG.28 is a perspective view showing the dehumidifier of the air supply device. A detailed explanation of the dehumidifier 810 will be given with reference to FIGS.27 and 28. The dehumidifier 810 has a shape of a cylinder having a round section on both ends thereof in such a manner as to be rotated around a center axis x passed through the center of one side section 810L (the left side section in FIG.27) and the center of the other side section 810R (the right side section in FIG.27). The dehumidifier 810 is connected to the dehumidifier driver 860 (that is, a motor) by means of a power transmission belt 861 and rotated for example in a direction of an arrow c by means of the dehumidifier driver 860.

The dehumidifier 810 has the dehumidifying agent containing portion 811 formed thereinto, and the dehumidifying agent (not shown) is filled in the dehumidifying agent containing portion 811. One side section 810L and the other side section 810R of the dehumidifier 810 are made of a material, through which air flows, preventing the filled dehumidifying agent from being escaped to the outside.

One side section 810L of the dehumidifier 810 has the air introduction portion 812 and the hot air exhaust portion 815 from which the hot air passed through the dehumidifier 810 is exhausted, interposing the center axis x therebetween, and the other side section 810R of the dehumidifier 810 has the dehumidified air sending portion 813 from which the dehumidified air is sent and the hot air introduction portion 814 for introducing the hot air.

The air introduction portion 812 exists at a position where the air flowing along the air flowing passage 820 can be introduced, and the hot air exhaust portion 815 exists at a position where the hot air passed through the dehumidifying agent is exhaustible. Further, the dehumidified air sending portion 813 exists at a position where the dehumidified air can be sent to the environmentally conditioned air flowing passage 830, and the hot air introduction portion 814 exists at a position where the hot air can be introduced.

The air introduction portion 812 and the dehumidified air sending portion 813 face each other at the positions deviated from the center axis x on one side section 810L and the other side section 810R. Further, the hot air introduction portion 814 and the hot air exhaust portion 815 face each other at the positions deviated from the center axis x on one side section 810L and the other side section 810R, while being located at the different positions from the air introduction portion 812 and the dehumidified air sending portion 813 thereon.

Further, since the dehumidifier 810 is rotated around the center axis x, the air introduction portion 812, the hot air exhaust portion 815, the dehumidified air sending portion 813 and the hot air introduction portion 814 are not fixedly located on the dehumidifier 810, but they are varied in accordance with the rotation of the dehumidifier 810.

That is, in FIG.27, the portion existing at the position where the air flowing along the air flowing passage 820 can be introduced is indicated by the air introduction portion 812, the portion existing at the position where the dehumidified air can be sent to the environmentally conditioned air flowing passage 830 is indicated by the dehumidified air sending portion 813, the portion existing at the position where the hot air can be introduced through the hot air flowing passage 840 is indicated by the hot air introduction portion 814, and the portion existing at the position where the hot air passed through the dehumidifying agent is exhaustible to the hot air exhaust passage 850 is indicated by the hot air exhaust portion 815.

By the way, the dehumidifier 810 may be continuously rotated or may be intermittently rotated every given rotating angle. If the dehumidifier 810 is continuously rotated, desirably, the rotating speed is determined upon the time needed for the generation of the dehumidified air and the time needed for the regeneration of the wet dehumidifying agent. That is, the dehumidifier 810 is rotated at the speed capable of dehumidifying the air introduced from the air introduction portion to given humidity and at the same time of sufficiently drying the wet dehumidifying agent through the hot air.

On the other hand, if the dehumidifier 810 is intermittently rotated every given rotating angle, desirably, the time for stopping the rotation is determined upon the time needed for the generation of the dehumidified air and the time needed for the regeneration of the wet dehumidifying agent. That is, the rotation of the dehumidifier 810 stops only for the time needed to dehumidify the air introduced from the air introduction portion to given humidity and for the time needed to sufficiently dry the wet dehumidifying agent through the hot air, and after that, the rotation thereof starts to allow the dehumidifier 810 to be repeatedly rotated only at the given rotating angle.

Under the above-mentioned configuration according to the sixth embodiment of the present invention, an operation of the electrospinning units of the nanofiber manufacturing apparatus 6 will be described. First, the long sheet W is set to the conveying unit 10, and the long sheet W is conveyed from the injection roller 11 to the winding roller 12 at the given conveying speed V. Next, the nanofibers are sequentially accumulated on the long sheet W through the plurality of electrospinning units 20.

After that, the long sheet W on which the nanofibers are accumulated is heated by means of the heating unit 30. Accordingly, the long sheet W on which the nanofibers are accumulated is manufactured as the nanofiber non-woven fabric.

Accordingly, the nanofiber non-woven fabric can be continuously produced. So as to continuously produce the nanofiber non-woven fabric having uniform physical properties, at this time, it is important to appropriately maintain the spinning conditions. As one of the spinning conditions, the environmental humidity and temperature in the electrospinning units 20 should be maintained appropriately for long hours. Hereinafter, the environmental humidity and temperature in the electrospinning units 20 are indicated simply by the humidity and temperature.

According to the sixth embodiment of the present invention, the nanofiber manufacturing apparatus 6 supplies the environmentally conditioned air to each electrospinning unit 20 through the air supply unit 80. As shown in FIGS.27 and 28, the air introduced from the air introduction portion 812 of the dehumidifier 810 is changed to the dehumidified air through the dehumidifying agent, and the dehumidified air is sent to the dehumidified air sending portion 813. The dehumidified air sent from the dehumidified air sending portion 813 is passed through the cooler 831C, the humidity adjustor 832 and the heater 831H, so that the air has the optimized humidity and temperature in each electrospinning unit 20.

The optimized humidity and temperature in each electrospinning unit 20 may be varied in accordance with the kinds of the nanofiber non-woven fabrics to be manufactured. However, the humidity is desirably adjusted in the range between 20% and 60%, and the temperature in the range between 20°C and 40°C.

If the humidity and temperature are adjusted in the ranges as mentioned above, it is desirable to conduct the electrospinning in the state where the humidity and temperature are maintained (in the state of constant humidity and temperature). For example, if the optimized humidity and temperature in each electrospinning unit 20 are determined to the humidity of 30% and the temperature of 25°C, the air to be sent to each electrospinning unit 20 is set to have the humidity of 30% and the temperature of 25°C, and further, in the state where the set humidity and temperature are maintained, desirably, the electrospinning is conducted.

On the other hand, when the electrospinning is conducted through each electrospinning unit 20, the VOCs are generated in high concentration. The VOCs are sent to the VOC treatment unit 70 and burnt and removed thereby. The hot air produced by the combustion heat generated upon the combustion of the VOCs is sent to the air supply unit 80.

The hot air sent from the VOC treatment unit 70 is sent to the heater 841 on the hot air flowing passage 840 of the air supply unit 80 through the filter 842. If the temperature of the hot air does not reach the temperature needed to regenerate the dehumidifying agent, the heater 841 raises the hot air to the appropriate temperature, and if the temperature of the hot air reaches the temperature needed to regenerate the dehumidifying agent, the heater 841 passes the hot air therethrough, without any operation. The hot air passed through the heater 841 is supplied to the hot water introduction portion 814 of the dehumidifier 810 and dries the wet dehumidifying agent filled in the dehumidifier 810 to regenerate the dried dehumidifying agent as that before wetted.

By the way, since the dehumidifier 810 is rotated by means of the dehumidifier driver 860, the wet dehumidifying agent through the production of the dehumidified air is located at the position exposed to the hot air from the hot air introduction portion 814 through the rotation of the dehumidifier 810. Further, the regenerated dehumidifying agent through the hot air from the hot air introduction portion 814 is located at the position exposed to the air introduced from the air introduction portion 812 through the rotation of the dehumidifier 810. Through the repetition of the above-mentioned operations, the production of the dehumidified air and the regeneration of the wet dehumidifying agent are repeatedly conducted.

Further, the dehumidified air is adjusted to given humidity and temperature during the process flowing along the environmentally conditioned air flowing passage 830. The adjusted humidity and temperature have given allowable error ranges. For example, the humidity of 30% has the allowable error range between 30% ± 5%, and the temperature of 25°C has the allowable error range between 25°C ± 1.0°C.

According to the sixth embodiment of the present invention, the nanofiber manufacturing apparatus 6 can supply the air conditioned to the optimized humidity and temperature (the environmentally conditioned air) in each electrospinning unit 20 to each electrospinning unit 20, thereby continuously producing the nanofiber non-woven fabric having the uniform physical properties in large quantities.

According to the sixth embodiment of the present invention, the nanofiber manufacturing apparatus 6 regenerates the wet dehumidifying agent by the production of the dehumidified air through the hot air produced by the combustion heat generated upon the combustion of VOCs, thereby repeatedly using the same dehumidifying agent and effectively utilizing the waste energy.

According to the sixth embodiment of the present invention, the nanofiber manufacturing apparatus 6 includes the plurality of electrospinning units 20 arranged in series along the given conveying direction a where the long sheet W is conveyed by means of the conveying unit 10 in such a manner as to one by one accumulate the nanofibers on the long sheet W therethrough, thereby at high productivity producing the nanofiber non-woven fabric having the uniform physical properties in large quantities.

The dehumidifier 810 includes the dehumidifying agent containing portion formed of one space portion in which the dehumidifying agent is filled, but it is not limited thereto. The interior of the dehumidifier 810 is divided into n (n is the natural number over 2) portions on the plane inclusive of the center axis x, thereby forming n dehumidifying agent containing portions, and the dehumidifying agent is filled in each of the n dehumidifying agent containing portions.

While the present invention has been described with reference to the particular illustrative embodiments, it is not to be restricted by the embodiments. It is to be appreciated that those skilled in the art can change or modify the embodiments without departing from the scope of the claims. For example, the present invention has modification examples as follows:

### [First modification example]

According to the preferred embodiments of the present invention, four electrospinning units are provided, but for example, three or five or more electrospinning units may be provided.

### [Second modification example]

According to the preferred embodiments of the present invention, the power supply is provided every electrospinning unit, but for example, one power supply supplies power to each electrospinning unit and at the same time measures the quantity of current supplied to each electrospinning unit and transmits the measured result to the main control unit..

### [Third modification example]

According to the preferred embodiments of the present invention, the positive electrode of the power supply is connected to the collector of each electrospinning unit, and the negative electrode thereof is connected to the nozzle block thereof.

### [Fourth modification example]

According to the preferred embodiments of the present invention, one nozzle block is mounted every electrospinning unit, but the present invention is not limited thereto. FIG.29 is a front view showing another electrospinning unit 20a having two nozzle blocks 110a1 and 110a2 mounted thereon.

In this case, all of nozzle blocks have the same nozzle arrangement pitches, and alternatively, they have different nozzle arrangement pitches from each other. Further, all of nozzle blocks have the same heights as each other, and alternatively, they have different heights from each other.

### [Fifth modification example]

The present invention may include a unit adapted to reciprocate the nozzle block in the width direction of the long sheet in a given reciprocating period. Through the unit, while the nozzle block is being reciprocated in the given reciprocating period, the electrospinning is conducted, thereby allowing the quantity of nanofibers to be accumulated uniformly in the width direction of the long sheet. In this case, the reciprocating period or distance of the nozzle block may be controlled every electrospinning unit or every nozzle block independently of each other. Under the above configuration, all of nozzle blocks are reciprocated in the same periods as each other, and further, they are reciprocated in the different periods from each other. Moreover, all of nozzle blocks are reciprocated in the same distances as each other, and further, they are reciprocated in the different distances from each other.

While the present invention has been described with reference to the particular illustrative embodiments, it is not to be restricted by the embodiments but only by the appended claims. It is to be appreciated that those skilled in the art can change or modify the embodiments without departing from the scope of the claims.

## Claims

1. A nanofiber manufacturing apparatus having a plurality of electrospinning units (20) disposed serially along the conveying direction of a long sheet (W) conveyed at a given conveying speed (V) to accumulate nanofibers on the long sheet, each electrospinning unit comprising:
a conductive case (100);
a collector (150) attached to the case by means of an insulation member (152);
a nozzle block (110) disposed to face the collector and having a plurality of nozzles (112) from which polymer solution is ejected mounted thereon;
a power supply (160) adapted to apply a high voltage to a space between the collector and the nozzle block;
an auxiliary belt (172) formed of an insulative porous endless belt located and freely rotated at a position encompassing the collector; and
an auxiliary belt driver (171) adapted to rotate the auxiliary belt to a rotating speed corresponding to the conveying speed of the long sheet,
wherein the positive electrode of the power supply is connected to the collector, and the negative electrode thereof to the nozzle block and the case and wherein the case or the nozzle block is grounded, and when the collector is seen from the nozzle block, the outer edge of the insulation member is located more outwardly than the outer edge of the collector, so that if it is assumed that the thickness of the insulation member is a and the distance between the outer edge of the insulation member and the outer edge of the collector is b, it is satisfied that a ≥ 6mm and a+b ≥ 50mm.

2. The nanofiber manufacturing apparatus according to claim 1, wherein the auxiliary belt driver comprises:
a plurality of auxiliary belt rollers on which the auxiliary belt is rolled;
a driving motor for rotating at least one of the plurality of auxiliary belt rollers; and
an auxiliary belt position controller for controlling the position of one of the plurality of auxiliary belt rollers in such a manner as to be located on one side end portion thereof from the inside of the auxiliary belt to the outside of the auxiliary belt, thereby controlling the position of the auxiliary belt with respect to the width direction of the auxiliary belt roller.

3. The nanofiber manufacturing apparatus according to claim 1 or 2, wherein the insulation member is made of polyamide, polyacetal, polycarbonate, modified poly phenylene ether, poly butylene terephthalate, polyethylene terephthalate, non-crystal polyalylate, polysulfone, polyether sulfone, polyphenylene sulfide, polyether ether ketone, polyimide, polyethyl imide, fluorine resin, liquid crystal polymer, polypropylene, high density polyethylene, or polyethylene.

4. The nanofiber manufacturing apparatus according to any one of claims 1 to 3, further comprising:
a conveying unit adapted to convey the long sheet; and
a main control unit adapted to control the operations of the conveying unit and the plurality of electrospinning units,
wherein when the main control unit monitors the quantity of current supplied from each power supply to each electrospinning unit and detects that a higher current than a given quantity of first set current is supplied from one or plurality of power supplies, the main control unit transmits a current supply stop signal for stopping the current supply from one or plurality of power supplies, and at the same time, transmits a conveying speed reduction signal for reducing the conveying speed of the conveying unit to allow the quantity of nanofibers per unit area accumulated on the long sheet to be in a given range.

5. The nanofiber manufacturing apparatus according to claim 4, wherein if the main control unit detects that a lower current than a given quantity of second set current is supplied from one or a plurality of power supplies, the main control unit transmits a warning signal (for example, a warning sound or a warning indicating signal) for indicating the trouble of one or the plurality of power supplies.

6. The nanofiber manufacturing apparatus according to claim 4 or 5, wherein if it is assumed that the number of power supplies conducting the current supply for a first period of time before the reduction of the conveying speed is n and the number of power supplies conducting the current supply for a second period of time after the reduction of the conveying speed is m, the conveying speed for the second period of time is set by m/n times to the conveying speed for the first period of time under the control of the main control unit.

7. The nanofiber manufacturing apparatus according to any one of claims 1 to 6, wherein each nozzle is located upwardly from the nozzle block to eject the polymer solution upwardly from the ejection hole thereof and has a nozzle front end portion having a shape of a cylinder cut along the plane crossing slantly to the axis of the cylinder, and the nozzle block has a polymer solution supply passage formed to supply the polymer solution to each nozzle and a polymer solution collection passage formed to collect the polymer solution overflowing from the ejection hole of each nozzle, so that the electrospinning of the nanofibers is conducted by the overflowing ejection of the polymer solution from the ejection hole of each nozzle and at the same time by the collection of the polymer solution overflowing from the ejection hole of each nozzle in such a manner as to allow the collected polymer solution to be reused as the material of the nanofibers.

8. The nanofiber manufacturing apparatus according to claim 7, wherein an angle θ between the axis of the cylinder and the plane is in the range between 15° and 60°.

9. The nanofiber manufacturing apparatus according to claim 7 or 8, wherein the polymer solution collection passage comprises:
an accommodating portion adapted to contain the polymer solution overflowing from the ejection holes of the plurality of nozzles;
a cover portion adapted to cover the accommodating portion and having a plurality of nozzle holes communicating with the plurality of nozzles; and
a plurality of jackets each adapted to cover the outer periphery of each nozzle protruding from the nozzle hole and having a jacket base portion formed on the base portion thereof and a jacket front portion formed on the front end portion thereof, the jacket front portion being thinner than the jacket base portion.

10. The nanofiber manufacturing apparatus according to any one of claims 7 to 9, further comprising:
a material tank adapted to store the polymer solution as the material of the nanofibers therein;
regeneration tanks adapted to regenerate the collected polymer solution and store the regenerated polymer solution thereinto;
an intermediate tank adapted to store the polymer solution supplied from the material tank or the regeneration tanks;
a first transfer unit adapted to transfer the polymer solution from the polymer solution collection passage of the nozzle block to the regeneration tanks;
a first transfer control unit adapted to control the transferring operation of the first transfer unit;
a second transfer unit adapted to transfer the polymer solution from the material tank and the regeneration tanks to the intermediate tank; and
a second transfer control unit adapted to control the transferring operation of the second transfer unit.

11. The nanofiber manufacturing apparatus according to claim 10, wherein the second transfer control unit controls whether the polymer solution is transferred from any of the material tank and the regeneration tanks to the intermediate tank.

12. The nanofiber manufacturing apparatus according to claim 11, wherein the first transfer control unit controls whether the polymer solution is transferred to any of the regeneration tanks, and if the polymer solution is transferred from the regeneration tanks to the intermediate tank, the second transfer control unit controls whether the polymer solution is transferred from any of the regeneration tanks to the intermediate tank.

13. The nanofiber manufacturing apparatus according to any one of claims 1 to 12, further comprising:
an air permeability measurement unit adapted to measure the air permeability of the long sheet on which the nanofibers are accumulated; and
a conveying speed control unit adapted to control the conveying speed in accordance with the air permeability measured through the air permeability measurement unit.

14. The nanofiber manufacturing apparatus according to claim 13, wherein the conveying speed control unit controls the conveying speed in accordance with the deviation quantity between the air permeability measured through the air permeability measurement unit and given target thickness.

15. The nanofiber manufacturing apparatus according to any one of claims 1 to 12, further comprising:
a thickness measurement unit adapted to measure the thickness of the long sheet on which the nanofibers are accumulated; and
a conveying speed control unit adapted to control the conveying speed in accordance with the thickness measured through the thickness measurement unit.

16. The nanofiber manufacturing apparatus according to claim 15, wherein the conveying speed control unit controls the conveying speed in accordance with the deviation quantity between the thickness measured through the thickness measurement unit and given target thickness.

17. The nanofiber manufacturing apparatus according to any one of claims 1 to 16, further comprising:
air supply units adapted to supply environmentally conditioned air correspondingly to the plurality of electrospinning units; and
volatile organic compound (herein, referred to as VOC) treatment units adapted to burn and remove VOCs generated from the plurality of electrospinning units,
wherein each air supply unit has a dehumidifier adapted to produce dehumidified air by using a dehumidifying agent dried through the hot air produced by the combustion heat generated during the combustion of the VOCs.

18. The nanofiber manufacturing apparatus according to claim 17, wherein the dehumidifier comprises:
a dehumidifying agent containing portion in which the dehumidifying agent is contained;
an air introduction portion adapted to introduce air to be dehumidified thereinto;
a dehumidified air sending portion from which the dehumidified air is sent;
a hot air introduction portion for introducing the hot air produced by the combustion heat; and
a hot air exhaust portion for exhausting the hot air of the hot air introduction portion to the outside,
whereby the dehumidifier dries and regenerates the dehumidifying agent used for the dehumidification of the introduced air through the hot air introduced into the hot air introduction portion.

19. The nanofiber manufacturing apparatus according to claim 18, wherein each air supply unit comprises:
an air flowing passage through which the air to be dehumidified flows;
an environmentally conditioned air flowing passage through which the dehumidified air sent from the dehumidified air sending portion flows;
a hot air flowing passage formed separated from the environmentally conditioned air flowing passage and adapted to guide the hot air produced by the combustion heat to the hot air introduction portion; and
a dehumidifier driver for driving the dehumidifier in such a manner where the air introduction portion of the dehumidifier introduces the air flowing along the air flowing passage and the hot air introduction portion introduces the hot air flowing along the hot air flowing passage.

## Patentansprüche

1. Eine Nanofaser herstellende Apparatur mit einer Vielzahl an elektrospinnenden Einheiten (20) hintereinander angeordnet entlang der Förderrichtung einer langen Platte (W), befördert mit einer gegebenen Fördergeschwindigkeit (V) um Nanofasern auf dem langen Tuch zu sammeln, wobei jede elektrospinnende Einheit umfasst:
ein leitendes Gehäuse (100);
einen Kollektor (150), der mittels eines isolierenden Elements (152) am Gehäuse angebracht ist;
einen Düsenstock (110), gegenüber dem Kollektor angeordnet, und mit einer Vielzahl an Düsen (112) die darauf befestigt sind, aus denen Polymerlösung herausspritzt;
eine Stromversorgung (160), geeignet um eine Hochspannung an einen Bereich zwischen dem Kollektor und dem Düsenstock anzulegen;
ein Hilfsband (172), gebildet aus einem isolierenden, porösen, endlosen Band, an einer Position angebracht und beliebig drehbar, den Kollektor umgebend; und
einen Hilfsband-Antrieb (171), geeignet das Hilfsband mit einer Drehgeschwindigkeit zu drehen, die mit der Fördergeschwindigkeit der langen Platte übereinstimmt,
wobei die positive Elektrode der Stromversorgung mit dem Kollektor verbunden ist, und die negative Elektrode davon mit dem Düsenblock und dem Gehäuse, und wobei das Gehäuse oder der Düsenblock geerdet ist, und wenn der Kollektor vom Düsenblock aus sichtbar ist, die Außenkante des isolierenden Elements weiter außen angebracht ist, als die Außenkante des Kollektors, so dass, falls angenommen die Dicke des isolierenden Elements a ist und der Abstand zwischen der Außenkante des isolierenden Elements und der Außenkante des Kollektors b ist, a ≥ 6mm und a+b ≥ 50mm erfüllt ist.

2. Die Nanofaser herstellende Apparatur gemäß Anspruch 1, wobei der Hilfsband-Antrieb umfasst:
eine Vielzahl an Hilfsband Rollen, auf denen das Hilfsband aufgewickelt ist;
einen Antriebsmotor um mindestens eine der Vielzahl an Hilfsband Rollen zu drehen; und
einen Hilfsband Positionsregler, um die Position einer der Vielzahl an Hilfsband Rollen zu kontrollieren, in der Weise auf einem Abschnitt des Seitenendes davon angebracht, um vom Inneren des Hilfsbandes zum Äußeren des Hilfsbandes, die Position des Hilfsbandes dadurch in Bezug auf die Breitenrichtung der Hilfsband Rolle zu steuern.

3. Die Nanofaser herstellende Apparatur gemäß Anspruch 1 oder 2, wobei das isolierende Element besteht aus Polyamid, Polyacetal, Polycarbonat, modifiziertem Polyphenylether, Polybutylenterephtalat, Polyethyleneterephtalat, nicht-kristallinem Polyarylat, Polysulfon, Polyethersulfon, Polyphenylsulfid, Polyetheretherketon, Polyimid, Polyethylimid, Fluor Harz, Flüssigkristallpolymer, Polypropylen, hochdichtes Polyethylen, oder Polyethylen.

4. Die Nanofaser herstellende Apparatur gemäß einem der Ansprüche 1 bis 3, weiter umfassend:
eine Förderanlage geeignet um die lange Platte zu befördern; und
eine Hauptsteuereinheit, geeignet um die Vorgänge der Förderanlage zu steuern und die Vielzahl der elektrospinnenden Einheiten,
wobei während die Hauptsteuereinheit die Strommenge überwacht, mit der jede Stromversorgung jede elektrospinnende Einheit versorgt und ermittelt dass eine höhere Stromstärke als eine gegebene Menge eines ersten festgesetzten Stromflusses von einer oder einer Vielzahl an Stromversorgungen bereitgestellt wird, übermittelt die Hauptsteuereinheit ein Stoppsignal an die Stromversorgung, um die Stromzufuhr von einem oder einer Vielzahl von Stromversorgungen zu stoppen, und übermittelt gleichzeitig ein Signal zur Reduzierung der Fördergeschwindigkeit um die Fördergeschwindigkeit der Fördereinheit zu reduzieren um sicherzustellen, dass die gesammelte Menge der Nanofasern pro Flächeneinheit in einem bestimmten Bereich bleibt.

5. Die Nanofaser herstellende Apparatur gemäß Anspruch 4, wobei falls die Hauptsteuereinheit einen geringeren Stromfluss ermittelt, als eine gegebene Menge eines zweiten festgesetzten Stromflusses, der durch eine oder eine Vielzahl der Stromversorgungen bereitgestellt wird, übermittelt die Hauptsteuereinheit ein Warnsignal (zum Beispiel einen Warnton oder ein eine Warnung anzeigendes Signal) um das Problem eines oder einer Vielzahl an Stromversorgungen anzuzeigen.

6. Die Nanofaser herstellende Apparatur gemäß Anspruch 4 oder 5, wobei falls angenommen, dass die Anzahl der Stromversorgungen den Stromfluss für eine erste Zeitspanne ausführend, vor der Reduktion der Fördergeschwindigkeit, n ist, und die Anzahl der Stromversorgungen den Stromfluss für eine zweite Zeitspanne ausführend, nach der Reduktion der Fördergeschwindigkeit, m ist, die Fördergeschwindigkeit für die zweite Zeitspanne festgelegt ist durch m/n mal die Fördergeschwindigkeit für die erste Zeitspanne unter der Kontrolle der Hauptsteuereinheit.

7. Die Nanofaser herstellende Apparatur gemäß einem der Ansprüche 1 bis 6, wobei jede Düse so angebracht ist, dass sie vom Düsenblock aufwärts gerichtet ist, um die Polymerlösung nach oben aus dem Ausgabeloch herauszuspritzen und eine Düsen Frontpartie in zylindrischer Form hat, die entlang der Ebene geschnitten ist, die schräg zu der Achse des Zylinders kreuzt, und der Düsenblock eine Versorgungspassage für die Polymerlösung hat, gebildet, um jede Düse mit Polymerlösung zu versorgen sowie eine Sammelpassage für Polymerlösung hat, gebildet um die Polymerlösung zu sammeln, die von dem Ausgabeloch einer jeden Düse überläuft, so dass das Elektrospinnen der Nanofasern durch das überlaufende Herausspritzen der Polymerlösung aus dem Ausgabeloch einer jeden Düse ausgeführt wird und gleichzeitig das Sammeln der Polymerlösung, die vom Ausgabeloch einer jeden Düse überläuft, in einer Weise, die ein Wiederverwenden der gesammelten Polymerlösung als Material für die Nanofasern erlaubt.

8. Die Nanofaser herstellende Apparatur gemäß Anspruch 7, wobei ein Winkel ⊝ zwischen der Achse des Zylinders und der Ebene im Bereich zwischen 15° und 60° ist.

9. Die Nanofaser herstellende Apparatur gemäß Anspruch 7 oder 8, wobei die Sammelpassage für die Polymerlösung umfasst:
einen Aufnahmeabschnitt, geeignet um die von den Ausgabelöchern der Vielzahl an Düsen überlaufende Polymerlösung zu enthalten;
einen Abdeckungsabschnitt, geeignet um den Aufnahmeabschnitt abzudecken und mit einer Vielzahl an Düsenbohrungen die mit der Vielzahl an Düsen kommunizieren; und
eine Vielzahl an Hüllen, jede geeignet, um die äußere Außenseite einer jeden Düse zu bedecken, hervortretend aus der Düsenbohrung und mit einem Hüllen Basisanteil gebildet auf dem Basisanteil davon und eine Hüllen Frontpartie gebildet auf der Frontpartie davon, wobei die Hüllen Frontpartie dünner ist, als der Hüllen Basisanteil.

10. Die Nanofaser herstellende Apparatur gemäß einem der Ansprüche 7 bis 9, weiter umfassend:
einen Materialbehälter, geeignet zur Aufbewahrung der Polymerlösung als Ausgangsmaterial der Nanofasern;
Regenerationsbehälter, geeignet zur Regenerierung der gesammelten Polymerlösung und die regenerierte Polymerlösung darin aufzubewahren;
einen Zwischenbehälter, geeignet zur Aufbewahrung der Polymerlösung, bereitgestellt aus dem Materialbehälter oder den Regernationsbehältern;
eine erste Übertragungseinheit, geeignet zur Überführung der Polymerlösung aus der Polymerlösungs Sammelpassage des Düsenblocks zu den Regenerationsbehältern;
eine erste Übertragungs-Steuereinheit, geeignet zur Steuerung des Übertragungs-Vorgangs der ersten Übertragungseinheit;
eine zweite Übertragungseinheit, geeignet zur Überführung der Polymerlösung aus dem Materialbehälter und den Regenerationsbehältern zu dem Zwischenbehälter; und
eine zweite Übertragungs-Steuereinheit, geeignet zur Steuerung des Übertragungs-Vorgangs der zweiten Übertragungseinheit.

11. Eine Nanofaser herstellende Apparatur gemäß Anspruch 10, wobei die zweite Übertragungs-Steuereinheit überwacht, ob die Polymerlösung von einem der Materialbehälter und den Regenerationsbehältern zu dem Zwischenbehälter überführt wird.

12. Die Nanofaser herstellende Apparatur gemäß Anspruch 11, wobei die erste Übertragungs-Steuereinheit überwacht, ob die Polymerlösung zu einem der Regenerationsbehälter überführt wird, und falls die Polymerlösung von den Regenerationsbehältern zu dem Zwischenbehälter überführt wird, überwacht die zweite Übertragungs-Steuereinheit ob die Polymerlösung von einem der Regenerationsbehälter zum Zwischenbehälter überführt wird.

13. Die Nanofaser herstellende Apparatur gemäß einem der Ansprüche 1 bis 12, weiter umfassend:
eine Luftdurchlässigkeits-Mess-Einheit, geeignet zur Messung der Luftdurchlässigkeit der langen Platte auf dem die Nanofasern gesammelt werden; und
eine Fördergeschwindigkeits-Steuereinheit, geeignet zur Steuerung der Fördergeschwindigkeit in Übereinstimmung mit der Luftdurchlässigkeit gemessen mittels der Luftdurchlässigkeits-Mess-Einheit.

14. Die Nanofaser herstellende Apparatur gemäß Anspruch 13, wobei die Fördergeschwindigkeits-Steuereinheit die Fördergeschwindigkeit in Übereinstimmung mit der Mengenabweichung zwischen der Luftdurchlässigkeit steuert, gemessen über die Luftdurchlässigkeits-Mess-Einheit und der gegebenen Solldicke.

15. Die Nanofaser herstellende Apparatur gemäß einem der Ansprüche 1 bis 12, weiter umfassend:
eine Dicke-Mess-Einheit, geeignet zur Messung der Dicke der langen Platte auf dem die Nanofasern gesammelt werden; und
eine Fördergeschwindigkeits-Steuereinheit, geeignet zur Steuerung der Fördergeschwindigkeit in Übereinstimmung mit der Dicke, gemessen über die Dickenmessungs-Einheit.

16. Die Nanofaser herstellende Apparatur gemäß Anspruch 15, wobei die Fördergeschwindigkeits-Steuereinheit die Fördergeschwindigkeit in Übereinstimmung mit der Mengenabweichung zwischen der gemessenen Dicke über die Dickenmessungs-Einheit und der gegebenen Solldicke.

17. Die Nanofaser herstellende Apparatur gemäß einem der Ansprüche 1 bis 16, weiter umfassend:
Luftversorgungseinheiten, geeignet zur entsprechenden Versorgung der Vielzahl an elektrospinnenden Einheiten mit ökologisch klimatisierter Luft; und
Behandlungseinheiten für flüchtige organische Verbindungen (hier als FOC bezeichnet), geeignet zur Verbrennung und Entfernung der FOCs, gebildet durch die Vielzahl der elektrospinnenden Einheiten,
wobei jede Luftversorgungseinheit einen Luftentfeuchter hat, geeignet zur Erzeugung von getrockneter Luft, durch Verwendung eines Entfeuchtungsmittels, getrocknet mit der heißen Luft, die durch die Verbrennungshitze während der Verbrennung der FOCs erzeugt wird.

18. Die Nanofaser herstellende Apparatur gemäß Anspruch 17, wobei der Luftentfeuchter umfasst:
einen Entfeuchtungsmittel enthaltenden Bereich, in welchem das Entfeuchtungsmittel enthalten ist;
einen Luftzuführungsbereich, geeignet zur Einbringung von Luft, zur dortigen Entfeuchtung;
einen Bereich zur Übermittlung von entfeuchteter Luft, von dem aus die entfeuchtete Luft übermittelt wird;
einen Bereich zur Einführung von heißer Luft, zur Einführung der heißen Luft, die durch die Verbrennungshitze erzeugt wird; und
einen Auslass-Bereich für heiße Luft, um heiße Luft aus dem Bereich zur Einführung von heißer Luft nach außen auszulassen,
wobei der Entfeuchter das Entfeuchtungsmittel trocknet und regeneriert, das zur Entfeuchtung der eingebrachten Luft verwendet wird über die heiße Luft, eingeführt in den Bereich zur Einführung von heißer Luft.

19. Die Nanofaser herstellende Apparatur gemäß Anspruch 18, wobei jede Luftversorgungseinheit umfasst:
eine Luftströmungspassage, über die die zu entfeuchtende Luft strömt;
eine Luftströmungspassage für ökologisch klimatisierte Luft, über die die entfeuchtete Luft überführt aus dem Bereich zur Übermittlung von entfeuchteter Luft strömt;
eine Strömungspassage für heiße Luft, getrennt von der Strömungspassage für ökologisch klimatisierte Luft ausgebildet und geeignet um die heiße Luft, die durch die Verbrennungshitze erzeugt wird, zu dem Bereich zur Einführung von heißer Luft zu leiten; und
eine Steuerung für den Entfeuchter, zur Steuerung de Entfeuchters in der Weise, so dass der Bereich zur Luft Einführung des Entfeuchters die Luft einführt, die entlang der Luftströmungspassage strömt und der Bereich zur Einführung von heißer Luft führt die heiße Luft ein, die die Strömungspassage für heiße Luft entlang strömt.

## Revendications

1. Appareil de fabrication de nanofibres ayant une pluralité de modules d'électrofilage (20) disposés en série le long de la direction de transport d'une feuille longue (W) transportée à une vitesse de transport donnée (V) pour accumuler des nanofibres sur la feuille longue, chaque module d'électrofilage comprenant :
un boîtier conducteur (100) ;
un collecteur (150) relié au boîtier au moyen d'un élément d'isolation (152) ;
un bloc de buses (110) disposé pour faire face au collecteur et ayant une pluralité de buses (112) desquelles de la solution polymère est éjectée montées sur lui ;
une alimentation électrique (160) adaptée à appliquer une haute tension à un espace entre le collecteur et le bloc de buses ;
une courroie auxiliaire (172) formée d'une courroie sans fin poreuse isolante et tournée librement à une position englobant le collecteur ; et
un dispositif d'entraînement de courroie auxiliaire (171) adapté à faire tourner la courroie auxiliaire à une vitesse de rotation correspondant à la vitesse de transport de la feuille longue,
dans lequel l'électrode positive de l'alimentation électrique est connectée au collecteur et l'électrode négative de celle-ci au bloc de buses et au boîtier, et dans lequel le boîtier ou le bloc de buses est relié à la terre, et lorsque le collecteur est vu depuis le bloc de buses, le bord externe de l'élément d'isolation est situé davantage vers l'extérieur que le bord externe du collecteur de sorte que, si l'on suppose que l'épaisseur de l'élément d'isolation est a et la distance entre le bord externe de l'élément d'isolation et le bord externe du collecteur est b, on satisfait la relation selon laquelle a ≥ 6 mm et a+b ≥ 50 mm.

2. Appareil de fabrication de nanofibres selon la revendication 1, dans lequel le dispositif d'entraînement de courroie auxiliaire comprend :
une pluralité de rouleaux de courroie auxiliaire sur lesquels la courroie auxiliaire est roulée ;
un moteur d'entraînement pour faire tourner au moins un de la pluralité de rouleaux de courroie auxiliaire ; et
un contrôleur de position de courroie auxiliaire pour commander la position d'un de la pluralité de rouleaux de courroie auxiliaire de manière à être situé sur une portion d'extrémité latérale de celui-ci de l'intérieur de la courroie auxiliaire vers l'extérieur de la courroie auxiliaire, commandant de ce fait la position de la courroie auxiliaire par rapport au sens de la largeur du rouleau de courroie auxiliaire.

3. Appareil de fabrication de nanofibres selon la revendication 1 ou 2, dans lequel l'élément d'isolation est réalisé en polyamide, polyacétal, polycarbonate, polyphénylène éther modifié, polybutylène téréphtalate, polyéthylène téréphtalate, polyallylate non cristallin, polysulfone, polyéthersulfone, polysulfure de phénylène, polyétheréthercétone, polyimide, polyéthylimide, résine de fluor, polymère cristal liquide, polypropylène, polyéthylène haute densité ou polyéthylène.

4. Appareil de fabrication de nanofibres selon l'une quelconque des revendications 1 à 3, comprenant en outre :
un module de transport adapté à transporter la feuille longue ; et
un module de commande principal adapté à commander les opérations du module de transport et de la pluralité de modules d'électrofilage,
dans lequel, lorsque le module de commande principal surveille la quantité de courant fournie de chaque alimentation électrique à chaque module d'électrofilage et détecte qu'un courant supérieur à une quantité donnée de premier courant réglé est fourni d'une ou d'une pluralité d'alimentations électriques, le module de commande principal transmet un signal d'arrêt de fourniture de courant pour arrêter la fourniture de courant d'une ou d'une pluralité d'alimentations électriques et transmet en même temps un signal de réduction de vitesse de transport pour réduire la vitesse de transport du module de transport afin de permettre à la quantité de nanofibres par unité d'aire accumulée sur la feuille longue d'être dans une plage donnée.

5. Appareil de fabrication de nanofibres selon la revendication 4, dans lequel, si le dispositif de commande principal détecte qu'un courant inférieur à une quantité donnée de second courant réglé est fourni à une ou une pluralité d'alimentations électriques, le module de commande principal transmet un signal d'avertissement (par exemple, un avertissement sonore ou un signal indicateur d'avertissement) pour indiquer le problème d'une ou de la pluralité d'alimentations électriques.

6. Appareil de fabrication de nanofibres selon la revendication 4 ou 5, dans lequel, si l'on suppose que le nombre d'alimentations électriques réalisant la fourniture de courant pendant une première période de temps avant la réduction de la vitesse de transport est n et le nombre d'alimentations électriques réalisant la fourniture de courant pendant une seconde période de temps après la réduction de la vitesse de transport est m, la vitesse de transport pendant la seconde période de temps est définie par m/n fois la vitesse de transport pendant la première période de temps sous le contrôle du module de commande principal.

7. Appareil de fabrication de nanofibres selon l'une quelconque des revendications 1 à 6, dans lequel chaque buse est située vers le haut depuis le bloc de buses pour éjecter la solution polymère vers le haut depuis l'orifice d'éjection de celle-ci et a une portion d'extrémité avant de buse ayant une forme de cylindre découpé le long du plan croisant en biais par rapport à l'axe du cylindre, et le bloc de buses a un passage de fourniture de solution polymère formé pour fournir la solution polymère à chaque buse et un passage de recueil de solution polymère formé pour recueillir la solution polymère débordant de l'orifice d'éjection de chaque buse de sorte que l'électrofilage des nanofibres est réalisé par l'éjection débordante de la solution polymère depuis l'orifice d'éjection de chaque buse et en même temps par le recueil de la solution polymère débordant de l'orifice d'éjection de chaque buse de manière à permettre à la solution polymère recueillie d'être réutilisée comme matière des nanofibres.

8. Appareil de fabrication de nanofibres selon la revendication 7, dans lequel un angle θ entre l'axe du cylindre et le plan est dans la plage comprise entre 15° et 60°.

9. Appareil de fabrication de nanofibres selon la revendication 7 ou 8, dans lequel le passage de recueil de solution polymère comprend :
une portion d'hébergement adaptée à contenir la solution polymère débordant des orifices d'éjection de la pluralité de buses ;
une portion de recouvrement adaptée à recouvrir la portion d'hébergement et ayant une pluralité d'orifices de buse communiquant avec la pluralité de buses ; et
une pluralité de chemises adaptées chacune à recouvrir la périphérie externe de chaque buse faisant saillie depuis l'orifice de buse et ayant une portion de base de chemise formée sur la portion de base de celles-ci et une portion avant de chemise formée sur la portion d'extrémité avant de celles-ci, la portion avant de chemise étant plus fine que la portion de base de chemise.

10. Appareil de fabrication de nanofibres selon l'une quelconque des revendications 7 à 9, comprenant en outre :
un réservoir de matière adapté à stocker la solution polymère comme matière des nanofibres en son sein ;
des réservoirs de régénération adaptés à régénérer la solution polymère recueillie et stocker la solution polymère régénérée en eux ;
un réservoir intermédiaire adapté à stocker la solution polymère fournie depuis le réservoir de matière ou les réservoirs de régénération ;
un premier module de transfert adapté à transférer la solution polymère du passage de recueil de solution polymère du bloc de buses aux réservoirs de régénération ;
un premier module de contrôle de transfert adapté à contrôler l'opération de transfert du premier module de transfert ;
un second module de transfert adapté à transférer la solution polymère du réservoir de matière et des réservoirs de régénération au réservoir intermédiaire ; et
un second module de contrôle de transfert adapté à contrôler l'opération de transfert du second module de transfert.

11. Appareil de fabrication de nanofibres selon la revendication 10, dans lequel le second module de contrôle de transfert contrôle si la solution polymère est transférée de l'un quelconque du réservoir de matière et des réservoirs de régénération au réservoir intermédiaire.

12. Appareil de fabrication de nanofibres selon la revendication 11, dans lequel le premier module de contrôle de transfert contrôle si la solution polymère est transférée de l'un quelconque des réservoirs de régénération et, si la solution de polymère est transférée des réservoirs de régénération au réservoir intermédiaire, le second module de contrôle de transfert contrôle si la solution polymère est transférée de l'un quelconque des réservoirs de régénération au réservoir intermédiaire.

13. Appareil de fabrication de nanofibres selon l'une quelconque des revendications 1 à 12, comprenant en outre :
un module de mesure de perméabilité à l'air adapté à mesurer la perméabilité à l'air de la feuille longue sur laquelle les nanofibres sont accumulées ; et
un module de commande de vitesse de transport adapté à commander la vitesse de transport conformément à la perméabilité à l'air mesurée par le module de mesure de perméabilité à l'air.

14. Appareil de fabrication de nanofibres selon la revendication 13, dans lequel le module de commande de vitesse de transport commande la vitesse de transport conformément à la quantité d'écart entre la perméabilité à l'air mesurée par le module de mesure de perméabilité à l'air et une épaisseur cible donnée.

15. Appareil de fabrication de nanofibres selon l'une quelconque des revendications 1 à 12, comprenant en outre :
un module de mesure d'épaisseur adapté à mesurer l'épaisseur de la feuille longue sur laquelle les nanofibres sont accumulées ; et
un module de commande de vitesse de transport adapté à commander la vitesse de transport conformément à l'épaisseur mesurée par le module de mesure d'épaisseur.

16. Appareil de fabrication de nanofibres selon la revendication 15, dans lequel le module de commande de vitesse de transport commande la vitesse de transport conformément à la quantité d'écart entre l'épaisseur mesurée par le module de mesure d'épaisseur et une épaisseur cible donnée.

17. Appareil de fabrication de nanofibres selon l'une quelconque des revendications 1 à 16, comprenant en outre :
des modules de fourniture d'air adaptés à fournir de l'air conditionné de manière écologique pour correspondre à la pluralité de modules d'électrofilage ; et
des modules de traitement de composés organiques volatils (désignés dans le présent par COV) adaptés à brûler et éliminer des COV générés depuis la pluralité de modules d'électrofilage,
dans lequel chaque module de fourniture d'air a un déshumidificateur adapté à produire de l'air déshumidifié en utilisant un agent de
déshumidification séché à travers l'air chaud produit par la chaleur de combustion générée au cours de la combustion des COV.

18. Appareil de fabrication de nanofibres selon la revendication 17, dans lequel le déshumidificateur comprend :
une portion contenant l'agent de déshumidification dans laquelle l'agent de déshumidification est contenu ;
une portion d'introduction d'air adaptée à introduire de l'air devant être déshumidifié dans celle-ci ;
une portion d'envoi d'air déshumidifié de laquelle l'air déshumidifié est envoyé ;
une portion d'introduction d'air chaud pour introduire l'air chaud produit par la chaleur de combustion ; et
une portion d'échappement d'air chaud pour faire s'échapper l'air chaud de la portion d'introduction d'air chaud vers l'extérieur,
moyennant quoi le déshumidificateur sèche et régénère l'agent de déshumidification utilisé pour la déshumidification de l'air introduit à travers l'air chaud introduit dans la portion d'introduction d'air chaud.

19. Appareil de fabrication de nanofibres selon la revendication 18, dans lequel chaque module de fourniture d'air comprend :
un passage d'écoulement d'air à travers lequel l'air devant être déshumidifié s'écoule ;
un passage d'écoulement d'air conditionné de manière écologique à travers lequel l'air déshumidifié envoyé de la portion d'envoi d'air déshumidifié s'écoule ;
un passage d'écoulement d'air chaud formé séparément du passage d'écoulement d'air conditionné de manière écologique et adapté à guider l'air chaud produit par la chaleur de combustion vers la portion d'introduction d'air chaud ; et
un dispositif d'entraînement de déshumidificateur pour entraîner le déshumidificateur de telle sorte que la portion d'introduction d'air du déshumidificateur introduise l'air s'écoulant le long du passage d'écoulement d'air et la portion d'introduction d'air chaud introduise l'air chaud s'écoulant le long du passage d'écoulement d'air chaud.
